# FASCICULE DE BREVET EUROPEEN

(11) **EP 4 096 938 B1**
(45) Date de publication et mention de la délivrance du brevet: **09.10.2024**
(21) Numéro de dépôt: 20828049.5
(22) Date de dépôt: 03.12.2020
(51) Int. Cl.: B60C 9/04, B60C 9/20

(54) **PNEUMATIQUE POUR MOTOCYLCETTE**
MOTORRADREIFEN
MOTORCYCLE TYRE

(30) Priorité: 29.01.2020 FR 2000876
(43) Date de publication de la demande: 07.12.2022
(73) Titulaire: COMPAGNIE GENERALE DES ETABLISSEMENTS MICHELIN, 63000 Clermont-Ferrand (FR)
(72) Inventeur: VILCOT, Florian, 63040 CLERMONT-FERRAND Cedex 9 (FR)
(74) Mandataire: M.F.P. Michelin
(86) Numéro de dépôt international: PCT/FR2020/052271
(87) Numéro de publication internationale: WO 2021/152223

(56) Documents cités:
- EP-A1- 1 992 502
- EP-A1- 2 664 465
- EP-A1- 3 199 377
- WO-A1-2019/122619
- WO-A1-2019/180369
- DE-T5- 112017 002 411
- DE-T5- 112017 002 411
- JP-A- 2008 162 355

## Description

La présente invention est relative à un pneumatique pour motocyclette et à un procédé de fabrication d'un tel pneumatique.

On connait de l'état de la technique un premier type de pneumatique pour motocyclette, ce premier type étant généralement connu sous l'appellation pneumatique de type bias. Un tel pneumatique de type bias, commercialisé par exemple sous l'appellation commerciale Michelin Pilot Street comprend un sommet, deux flancs, deux bourrelets, chaque flanc reliant chaque bourrelet au sommet. Le pneumatique comprend également une armature ancrée dans chaque bourrelet et s'étendant dans chaque flanc et radialement intérieurement au sommet. L'armature comprend une couche radialement intérieure délimitée axialement par deux bords axiaux et comprenant des éléments de renfort filaires s'étendant axialement du bord axial à l'autre bord axial les uns sensiblement parallèlement aux autres selon une première direction principale formant, avec la direction circonférentielle, un angle AB1 égal à +34°. L'armature comprend une couche radialement extérieure délimitée axialement par deux bords axiaux et comprenant des éléments de renfort filaires s'étendant axialement du bord axial à l'autre bord axial les uns sensiblement parallèlement aux autres selon une deuxième direction principale formant, avec la direction circonférentielle, un angle AB2 égal à -34°. Les angles de chacune des couches sont, en valeur absolue, égaux mais présentent des orientations opposées. Le sommet est dépourvu d'autres couches renforcées d'éléments de renfort filaires.

On connait de l'état de la technique un deuxième type de pneumatique pour motocyclette, ce deuxième type étant généralement connu sous l'appellation pneumatique de type radial. Un tel pneumatique de type radial, commercialisé par exemple sous l'appellation commerciale Michelin Pilot Road 4, comprend un sommet, deux flancs, deux bourrelets, chaque flanc reliant chaque bourrelet au sommet. Le pneumatique comprend également une armature de carcasse ancrée dans chaque bourrelet et s'étendant dans chaque flanc et radialement intérieurement au sommet. L'armature de carcasse comprend deux couches de carcasse, chacune délimitée axialement par deux bords axiaux et comprenant des éléments de renfort filaires de carcasse s'étendant axialement du bord axial à l'autre bord axial les uns sensiblement parallèlement aux autres selon une direction principale formant, avec la direction circonférentielle, un angle allant, en valeur absolue, de 80° à 90°. On qualifie de radial un tel pneumatique du fait de l'orientation sensiblement radiale de éléments de renfort filaires de carcasse. Le sommet comprend une armature de sommet agencée radialement entre une bande de roulement et l'armature de carcasse. L'armature de sommet comprend au moins un élément de renfort filaire de sommet enroulé circonférentiellement hélicoïdalement de façon à s'étendre axialement d'un bord axial à l'autre bord axial de l'armature de sommet selon une direction principale du ou de chaque élément de renfort filaire de sommet. Etant enroulé circonférentiellement hélicoïdalement, le ou chaque élément de renfort filaire de sommet s'étend selon une direction principale formant, avec la direction circonférentielle du pneumatique, un angle, en valeur absolue, sensiblement égal à 5°.

Bien que peu coûteux en raison d'un procédé de fabrication très simple et de matériaux peu onéreux, le pneumatique de type bias présente toutefois des défauts parmi lesquels sa capacité à conserver la dimension radiale attendue, que ce soit lors de l'application de la pression de gonflage qui déforme radialement le pneumatique ou que ce soit lors d'un roulage à haute vitesse qui déforme également radialement le pneumatique en raison de la force centrifuge.

Le pneumatique de type radial présente l'inconvénient d'être plus coûteux en raison d'une part de la présence de deux couches de carcasses et d'une couche de sommet, et d'autre part de la présence de l'élément de renfort filaire de sommet enroulé circonférentiellement hélicoïdalement. En effet, afin de fabriquer un tel pneumatique, il est nécessaire de mettre en oeuvre un procédé dans lequel on forme tout d'abord sur un support présentant une forme sensiblement cylindrique un ensemble de carcasse enroulé destiné à former la couche de carcasse. Puis, on déforme l'ensemble de carcasse enroulé de forme sensiblement cylindrique de façon à obtenir l'ensemble de carcasse enroulé de forme sensiblement torique. Enfin, on enroule autour de l'ensemble de carcasse enroulé de forme sensiblement torique l'élément de renfort filaire de sommet circonférentiellement hélicoïdalement. Cette succession d'étapes est particulièrement chronophage ce qui augmente la durée de fabrication du pneumatique et donc son coût de production.

Des pneumatiques sont connus des documents suivants de l'état de la technique : EP2664465, EP3199377, EP1992502, DE112017002411.

L'invention a pour but de proposer un pneumatique capable de mieux conserver sa dimension radiale attendue par rapport à un pneumatique de type bias décrit ci-dessus et moins coûteux qu'un pneumatique de type radial décrit ci-dessus.

A cet effet, l'invention a pour objet un pneumatique pour motocyclette comprenant un sommet, deux flancs, deux bourrelets, chaque flanc reliant chaque bourrelet au sommet, le pneumatique comprenant une armature de carcasse ancrée dans chaque bourrelet et s'étendant dans chaque flanc et radialement intérieurement au sommet, l'armature de carcasse comprenant une unique couche de carcasse, le sommet comprenant :
- une bande de roulement destinée à venir en contact avec un sol lors du roulage du pneumatique,
- une armature de sommet agencée radialement entre la bande de roulement et l'armature de carcasse, l'armature de sommet comprenant une unique couche de sommet,

la couche de sommet est délimitée axialement par deux bords axiaux de la couche de sommet et comprend des éléments de renfort filaires de sommet s'étendant axialement d'un bord axial à l'autre bord axial de la couche de sommet les uns sensiblement parallèlement aux autres selon une direction principale de chaque élément de renfort filaire de sommet formant, avec la direction circonférentielle du pneumatique, un angle AT,
la couche de carcasse est délimitée axialement par deux bords axiaux de la couche de carcasse et comprend des éléments de renfort filaires de carcasse s'étendant axialement d'un bord axial à l'autre bord axial de la couche de carcasse, chaque élément de renfort filaire de carcasse s'étendant selon une direction principale de chaque élément de renfort filaire de carcasse, formant, avec la direction circonférentielle du pneumatique, un angle ACS, dans une portion de la couche de carcasse s'étendant axialement à l'aplomb radial de la couche de sommet,
l'angle AT et l'angle ACS étant d'orientations opposées,
l'angle AT et l'angle ACS sont différents en valeur absolue et l'une ou l'autre des conditions I ou Il est satisfaite :
   I - l'angle AT va, en valeur absolue, de 10° à 25° et l'angle ACS va, en valeur absolue, de 20° à 65° dans la portion de la couche de carcasse s'étendant axialement à l'aplomb radial de la couche de sommet,
   II - l'angle AT va, en valeur absolue, de 20° à 65° et l'angle ACS va, en valeur absolue, de 10° à 25° dans la portion de la couche de carcasse s'étendant axialement à l'aplomb radial de la couche de sommet.

Les pneumatiques de l'invention sont destinés à des motocyclettes tels que définis au sens de la norme de la European Tyre and Rim Technical Organisation ou « ETRTO », 2019. Un tel pneumatique présente une section dans un plan de coupe méridien caractérisée par une hauteur de section H, une largeur de section nominale ou grosseur boudin S, une largeur hors tout du pneumatique SG, au sens de la norme de la European Tyre and Rim Technical Organisation ou « ETRTO », 2019.

Conformément à l'invention, l'armature de sommet comprend une unique couche de sommet. Ainsi, l'armature de sommet est, à l'exception de la couche de sommet, dépourvue de toute couche renforcée par des éléments de renfort filaires. Les éléments de renfort filaires de telles couches renforcées exclues de l'armature de sommet du pneumatique comprennent les éléments de renfort filaires métalliques et les éléments de renfort filaires textiles. De façon très préférentielle, l'armature de sommet est constituée par l'unique couche de sommet.

Conformément à l'invention, l'armature de carcasse comprend une unique couche de carcasse. Ainsi, l'armature de carcasse est, à l'exception de l'unique couche de carcasse, dépourvue de toute couche renforcée par des éléments de renfort filaires. Les éléments de renfort filaires de telles couches renforcées exclues de l'armature de carcasse du pneumatique comprennent les éléments de renfort filaires métalliques et les éléments de renfort filaires textiles. De façon très préférentielle, l'armature de carcasse est constituée par l'unique couche de carcasse.

L'angle AT ou ACS allant de 10° à 25° est relativement petit et permet de reprendre significativement plus d'efforts longitudinaux que les couches de carcasse du pneumatique de type bias de l'état de la technique. Ainsi, on empêche le pneumatique de s'étendre radialement et, par conséquent, on maintient davantage sa dimension radiale attendue, que ce soit lors de l'application de la pression de gonflage ou lors d'un roulage à haute vitesse.

La combinaison des angles AT et ACS est, quelle que soit la condition I ou II, impossible à atteindre avec un pneumatique de type bias dans lequel l'angle AB1 et l'angle AB2 sont identiques. En effet, lors du procédé de fabrication du pneumatique de type bias, on forme par enroulement sur un support de forme sensiblement cylindrique un ensemble enroulé radialement intérieur destiné à former la couche radialement intérieure puis on forme par enroulement sur l'ensemble enroulé radialement intérieur un ensemble enroulé radialement extérieur destiné à former la couche radialement extérieure. Ensuite, on déforme l'assemblage formé par les ensembles enroulés radialement intérieur et radialement extérieur et de forme sensiblement cylindrique de façon à obtenir un assemblage de forme sensiblement torique. Avant l'étape de déformation, chaque ensemble enroulé présente une densité initiale d'éléments de renfort filaires. Les inventeurs à l'origine de l'invention ont observé que, à l'issue de l'étape de déformation, la densité finale d'éléments de renfort filaires de chaque ensemble enroulé était strictement supérieure à la densité initiale et ce d'autant plus que les angles AB1 et AB2 de chaque couche étaient petits. En d'autres termes, lors de l'étape de déformation, il se produit une densification de chaque ensemble enroulé. Or, cette densification ne peut dépasser un certain plafond au-delà duquel les éléments de renfort filaires sont trop proches et entrainent des problèmes d'endurance du pneumatique. Il est ainsi impossible d'atteindre, avec un pneumatique de type bias dans lequel les angles AB1 et AB2 sont identiques, des valeurs absolues d'angles relativement petites et permettant de maintenir la dimension radiale attendue. Au contraire, le pneumatique selon l'invention, en raison de la différenciation des angles AT et ACS, permet d'atteindre, au moins pour l'un des angles AT et ACS un angle relativement petit allant de 10° à 25° et ainsi de maintenir la dimension radiale attendue.

L'angle ACS ou AT allant de 20° à 65° étant en valeur absolue relativement petit, il permet à la couche correspondante de participer au maintien de la dimension radiale attendue. Par ailleurs, les inventeurs ont noté que, dans l'intervalle allant de 20° à 65°, le maintien de la dimension radiale était majoritairement influencé par l'angle AT ou ACS allant de 10° à 25° de l'autre couche. Ainsi, le concepteur du pneumatique a la possibilité de déterminer le compromis de performances optimum en choisissant l'angle ACS ou AT dans l'intervalle allant de 20° à 65° sans que cela ne dégrade le maintien de la dimension radiale attendue.

Le pneumatique selon l'invention est moins sensible aux problèmes liés à l'équilibre de la structure du pneumatique. En effet, dans le cas d'un pneumatique de type bias, la structure du pneumatique est radialement peu extensible, notamment lors de son procédé de fabrication, en raison des angles d'orientations opposées des éléments de renfort de l'armature qui bloque la déformation de l'ébauche crue depuis sa forme sensiblement cylindrique vers sa forme sensiblement torique. Ainsi, dans le cas d'un pneumatique de type bias, il est nécessaire de maitriser très précisément la variabilité industrielle au risque de mettre au rebus un nombre important de pneumatiques. Au contraire, le pneumatique selon l'invention est radialement bien plus extensible en raison de la présence d'une unique couche de carcasse et d'une unique couche de sommet dont les angles des éléments de renfort peuvent varient librement lors de la déformation de l'ébauche crue depuis sa forme sensiblement cylindrique vers sa forme sensiblement torique. Que ce soit sous la couche de sommet ou dans chaque flanc, l'angle formé par la direction principale de chaque élément de renfort filaire de carcasse peut, sous l'effet de la variabilité industrielle, varier de quelques degrés sans que cela n'ait de conséquences significatives sur les performances attendues du pneumatique.

Le pneumatique selon l'invention est bien moins long à fabriquer que le pneumatique de type radial car d'une part, la couche de sommet n'est pas nécessairement formée par enroulement hélicoïdal d'un ou de plusieurs éléments filaires de sommet sur plusieurs tours complets et peut être formée par enroulement sur au plus un tour complet d'une ou plusieurs nappes de sommet préalablement fabriquée. Le nombre de tours nécessaires à la formation de la couche de sommet est donc significativement réduit ainsi que le temps de formation de la couche de sommet. D'autre part, la ou les nappes de sommet peuvent être fabriquées en temps masqué, ce qui permet d'optimiser le temps de cycle du procédé de fabrication du pneumatique. En raison d'un procédé plus rapide, le pneumatique selon l'invention est bien moins coûteux à fabriquer que le pneumatique de type radial.

De plus, la couche de sommet étant contenue dans le sommet du pneumatique, la couche de sommet présente des dimensions axiales moindres que la couche de carcasse radialement extérieure du pneumatique de type bias. Cela permet d'alléger significativement le pneumatique selon l'invention par rapport au pneumatique de type bias, mais également de baisser son coût du fait de l'utilisation de moins de matériaux.

Indépendamment du fait que les angles AT et ACS soient constants ou non sur l'ensemble de la portion du pneumatique comprise axialement entre les bords axiaux de la couche de sommet, les angles AT et ACS sont d'orientations opposées sur l'ensemble de la portion du pneumatique comprise axialement entre les bords axiaux de la couche de sommet.

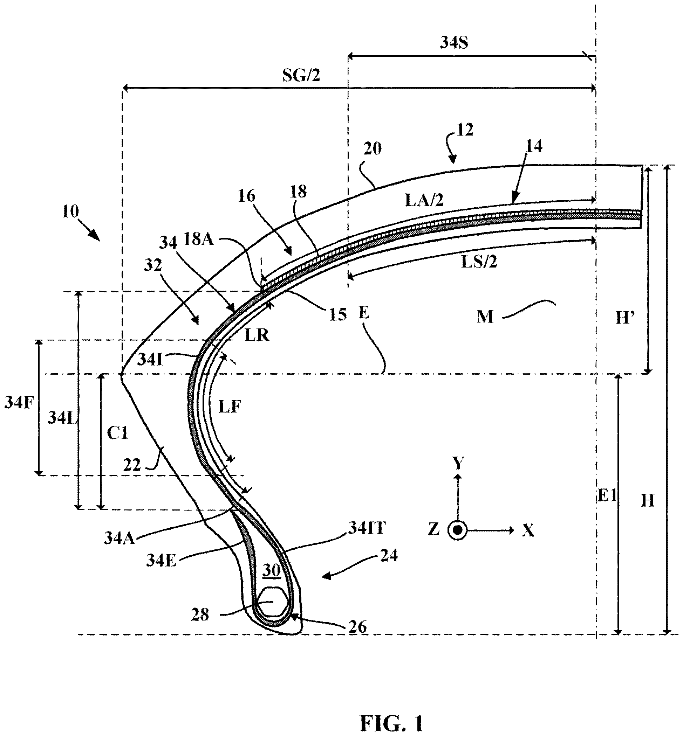

Le pneumatique selon l'invention est un pneumatique pour motocyclette. De tels pneumatiques sont préférentiellement caractérisés par un taux de courbure allant de 0,15 à 0,50, de préférence allant de 0,20 à 0,40. Un pneumatique pour motocyclette, à la différence d'un pneumatique pour véhicule pour automobile, présente une bande de roulement très cintrée, ayant une courbure marquée distinctive. En particulier, cette courbure est caractérisée par la valeur du taux de courbure H' / SG, où H' représente la hauteur radiale de la bande de roulement par rapport au plan circonférentiel équatorial E passant par les extrémités radialement extérieures de ladite bande de roulement, et SG représente la largeur hors tout du pneumatique, c'est-à-dire la largeur axiale mesurée à l'équateur, comme représenté sur la figure 1.

Avantageusement, les pneumatiques visés par l'invention sont tels que le rapport nominal d'aspect H/S, exprimé en pourcentage, est au moins égal à 40, de préférence au moins égal à 65 et est au plus égal à 100, de préférence au plus égal à 80., et la largeur de section nominale ou grosseur boudin S est au moins égale à 50 mm, de préférence au moins égale à 90 mm et plus préférentiellement au moins égale à 100 mm et au plus égal à 240 mm, de préférence au plus égal à 180 mm, plus préférentiellement au plus égal à 150 mm. En outre le diamètre au crochet nominal D, définissant le diamètre de la jante de montage du pneumatique, est au moins égal à 10 pouces, de préférence au moins égal à 13 pouces et au plus égal à 21 pouces, de préférence au plus égal à 16 pouces.

Par direction axiale, on entend la direction sensiblement parallèle à l'axe principal du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique (noté E), on entend, dans un plan de coupe méridienne, le plan passant par l'équateur du pneumatique, perpendiculaire au plan médian et à la direction radiale. L'équateur du pneumatique est, dans un plan de coupe méridienne (plan perpendiculaire à la direction circonférentielle et parallèle aux directions radiale et axiales) l'axe parallèle à l'axe de rotation du pneumatique et passant par les points axialement les plus extérieurs du pneumatique.

La hauteur H du pneumatique est la distance radiale entre le point radialement le plus externe de la bande de roulement destiné à être au contact avec le sol et le point radialement le plus interne du pneumatique destiné à être en contact avec un support, par exemple une jante.

Par plan méridien, on entend un plan parallèle à et contenant l'axe de rotation du pneumatique et perpendiculaire à la direction circonférentielle.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Par direction principale selon laquelle un élément de renfort filaire s'étend, on comprend la direction selon laquelle l'élément de renfort filaire s'étend selon sa plus grande longueur. La direction principale selon laquelle un élément de renfort filaire s'étend peut être rectiligne ou courbe, l'élément de renfort pouvant décrire le long de sa direction principale une trajectoire rectiligne ou bien ondulée.

Par portion de l'assemblage, d'une couche ou du pneumatique comprise axialement entre les bords axiaux d'un ensemble enroulé ou d'une couche ou d'une armature, on comprend une portion de l'assemblage, de la couche ou du pneumatique s'étendant axialement et comprise entre les plans radiaux passant par les bords axiaux de l'ensemble enroulé ou de la couche ou de l'armature.

Par portion d'un ensemble enroulé destinée à s'étendre axialement, portion d'un ensemble enroulé s'étendant axialement ou portion d'une couche s'étendant axialement à l'aplomb radial d'un ensemble de référence ou d'une couche de référence, on comprend une portion dudit ensemble ou de ladite couche comprise entre les projections radiales des bords axiaux de l'ensemble de référence ou de la couche de référence sur ledit ensemble ou ladite couche.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Concernant chaque élément de renfort filaire, dans le pneumatique, l'angle considéré est l'angle, en valeur absolue, le plus petit des deux angles définis entre la droite de référence, ici la direction circonférentielle du pneumatique, et la direction principale selon laquelle l'élément de renfort filaire considéré s'étend.

Concernant chaque élément de renfort filaire, dans le pneumatique et lors du procédé, par orientation d'un angle, on entend le sens, horaire ou anti-horaire, dans lequel il faut tourner depuis la droite de référence, ici la direction circonférentielle du support, de l'assemblage ou du pneumatique, définissant l'angle pour atteindre la direction principale selon laquelle l'élément de renfort filaire considéré s'étend.

Concernant chaque élément de renfort filaire, lors du procédé, les angles considérés formés par les directions principales selon lesquelles s'étendent les éléments de renfort filaires de sommet et de carcasse sont par convention des angles d'orientations opposées et l'angle formé par la direction principale selon laquelle s'étend chaque élément de renfort filaire de sommet est, en valeur absolue, le plus petit des deux angles définis entre la droite de référence, ici la direction circonférentielle du support, de l'assemblage ou du pneumatique et la direction principale selon laquelle l'élément de renfort filaire de sommet s'étend. Ainsi, l'angle formé par la direction principale selon laquelle s'étend chaque élément de renfort filaire de sommet définit une orientation qui est opposée à celle formée par l'angle de la direction principale selon laquelle s'étend chaque élément de renfort filaire de carcasse.

Dans des modes de réalisation dans lesquels la direction principale de chaque élément de renfort filaire de carcasse présente, entre les portions, des zones de transition où l'angle est sensiblement variable, la portion de la couche de carcasse s'étendant axialement à l'aplomb radial de la couche de sommet et dont on caractérise l'angle ACS présente une largeur curviligne selon la direction axiale égale à au moins 30%, de préférence au moins 40% de la largeur curviligne selon la direction axiale de la couche de sommet.

Dans des modes de réalisation dans lesquels la direction principale de chaque élément de renfort filaire de carcasse présente, entre les portions, des zones de transition où l'angle est sensiblement variable, la portion de la couche de carcasse s'étendant axialement à l'aplomb radial de la couche de sommet et dont on caractérise l'angle ACS présente une largeur curviligne selon la direction axiale égale à au plus 90%, de préférence au plus 80% de la largeur curviligne selon la direction axiale de la couche de sommet.

De préférence, le plan médian du pneumatique coupe cette portion de la couche de carcasse s'étendant axialement à l'aplomb de la couche de sommet. Plus préférentiellement, cette portion de la couche de carcasse s'étendant axialement à l'aplomb radial de la couche de sommet est centrée axialement sur le plan médian du pneumatique.

Par largeur curviligne selon la direction axiale on entend la largeur mesurée dans un plan de coupe méridien entre les deux bords axiaux de la couche correspondante en suivant la courbure de ladite couche, par exemple en suivant une ligne courbe passant au milieu de l'épaisseur radiale de ladite couche. Cette largeur est dite curviligne par opposition à la largeur droite qui elle serait mesurée entre les deux bords axiaux de la couche parallèlement à l'axe de rotation du pneumatique entre les deux bords axiaux.

Dans le pneumatique selon l'invention, le sommet comprend la bande de roulement et l'armature de sommet. On entend par bande de roulement une bande de matériau polymérique, de préférence élastomérique, délimitée :
- radialement vers l'extérieur, par une surface destinée à être au contact d'un sol et
- radialement vers l'intérieur, par l'armature de sommet.

La bande de matériau polymérique est constituée d'une couche d'un matériau polymérique, de préférence élastomérique ou bien constituée d'un empilement de plusieurs couches, chaque couche étant constituée d'un matériau polymérique, de préférence élastomérique.

Dans un mode de réalisation très préférentiel, le sommet comprend une unique armature de sommet. Ainsi, le sommet est, à l'exception, de l'armature de sommet, dépourvue de toute armature renforcée par des éléments de renfort filaires. Les éléments de renfort filaires de telles armatures exclues du sommet du pneumatique comprennent les éléments de renfort filaires métalliques et les éléments de renfort filaires textiles. De façon très préférentielle, le sommet est constitué par la bande de roulement et l'armature de sommet.

Dans un mode de réalisation très préférentiel, l'armature de carcasse est agencée directement radialement au contact de l'armature de sommet et l'armature de sommet est agencée directement radialement au contact de la bande de roulement.

Par directement radialement au contact, on comprend que les objets considérés directement radialement au contact l'un de l'autre, ici les armatures et la bande de roulement, ne sont séparés radialement par aucun objet, par exemple par aucune couche, armature ni bande qui serait interposé radialement entre les objets considérés directement radialement au contact l'un de l'autre.

De façon préférée :
- dans le cas où la condition I est satisfaite, l'angle ACS va, en valeur absolue, de 20° à 60° dans la portion de la couche de carcasse s'étendant axialement à l'aplomb radial de la couche de sommet,
- dans le cas où la condition Il est satisfaite, l'angle AT va, en valeur absolue, de 20° à 60°.

Afin d'améliorer la performance au test réglementaire d'énergie de rupture ou « Breaking Energy Test» en anglais, la somme des valeurs absolues de l'angle AT et de l'angle ACS est strictement inférieure ou égale à 70°, de préférence inférieure ou égal à 60°, et plus préférentiellement va de 40° à 60°. Lorsqu'un pneumatique de type bias est soumis au test d'énergie de rupture, la couche radialement extérieure est la couche qui rompt la première, d'une part car les éléments de renfort filaires de cette couche radialement extérieure sont soumis à des tensions significativement plus importantes que celles auxquelles sont soumis les éléments de renfort filaires de la couche radialement intérieure, et ce en raison de sa position radialement extérieure et, d'autre part, en raison de la présence d'une épaisseur de matériau élastomérique entre les deux couches qui protège, au travers de son cisaillement lorsqu'il est soumis au test d'énergie à rupture, la couche radialement intérieure. En d'autres termes, la couche radialement extérieure est la couche fusible et on n'exploite pas pleinement le potentiel de résistance de l'ensemble formée par les deux couches radialement intérieure et extérieure. De façon surprenante, les inventeurs ont découvert que le fait de réduire l'écart angulaire entre les directions principales des éléments de renfort filaires de sommet et de carcasse permettait d'obtenir une amélioration significative de l'énergie à rupture. Pour expliquer cela, les inventeurs émettent l'hypothèse qu'en réduisant l'écart angulaire, la différence de tension entre les éléments de renfort filaires de sommet et de carcasse lors du test d'énergie à rupture est significativement réduite par rapport à un pneumatique de type bias, ce qui permet d'exploiter le potentiel de résistance de l'ensemble formé par les deux couches de sommet et de carcasse. Cela est d'autant plus inattendu en raison de l'angle relativement petit formé par les éléments de renfort filaires de sommet dans le cas de la condition I et par les éléments de renfort filaires de carcasse dans le cas de la condition II qui augmente la tension reprise par les éléments filaires de la couche concernée lors du test d'énergie à rupture par rapport à une couche dans laquelle l'angle des éléments de renfort filaires est plus grand, comme cela est le cas dans un pneumatique de type bias. Ainsi, en résumé, même si la tension générée lors du test d'énergie à rupture sur les éléments filaires de la couche concernée est plus importante, le fonctionnement homogène des couches de sommet et de carcasse permet néanmoins d'augmenter la performance au test d'énergie à rupture.

De façon à encore améliorer la performance au test d'énergie à rupture, le rapport de la résistance à la rupture de la couche de sommet sur la résistance à la rupture de la couche de carcasse est strictement supérieur à 1, de préférence va de 1,10 à 1,45 et plus préférentiellement de 1,25 à 1,35. En augmentant la résistance à rupture de la couche de sommet qui est la couche fusible, on repousse le moment où on rompt la couche de sommet. On profite ainsi de façon synergique de l'amélioration liée au fonctionnement homogène des couches de sommet et de carcasse et de l'amélioration liée au renforcement de la couche de sommet qui est la couche fusible. Le rapport optimal entre la résistance à la rupture de la couche de sommet sur la résistance à la rupture de la couche de carcasse dépend notamment des angles AT et ACS. Ainsi, plus on aura des angles AT et ACS grands, plus il sera préférable d'avoir un rapport élevé. Plus les angles AT et ACS seront petits, plus le rapport préféré sera petit. L'homme du métier saura, en fonction des angles AT et ACS qu'il aura choisi, déterminer le rapport optimal, si besoin par des essais successifs en faisant varier les résistances mécaniques de chacune des couches de sommet et de carcasse.

Afin de déterminer la résistance mécanique d'une couche exprimée en daN/mm, on mesure la force à rupture d'un élément de renfort filaire de la couche, par exemple selon la norme ASTM D 885/D 885M - 10a de 2014. Puis, on multiplie la force à rupture de l'élément de renfort filaire par la densité d'éléments de renfort filaires par unité de largeur de la nappe destinée à former la couche, ici par le nombre d'éléments de renfort filaires par mm de nappe destinée à former la couche, ce nombre étant déterminé selon une direction perpendiculaire à la direction selon laquelle les éléments de renfort filaires s'étendent dans la nappe destinée à former la couche. Les résistances mécaniques, et notamment les densités d'éléments de renfort filaires de chacune des couches de sommet et de carcasse sont mesurées avant l'étape de déformation sur chaque nappe destinée à former la couche correspondante.

Dans des modes de réalisation préférés permettant d'obtenir un excellent compromis entre la résistance mécanique de la couche de sommet, notamment à la pression d'éclatement, le coût et la masse de la couche de sommet:
- la couche de sommet présente une résistance à la rupture supérieure ou égale à 1900 daN/dm, de préférence supérieure ou égale à 2300 daN/dm.
- la couche de sommet présente une résistance à la rupture inférieure ou égale à 2600 daN/dm.

Dans des modes de réalisation préférés permettant d'obtenir un excellent compromis entre la résistance mécanique de la couche de carcasse, notamment à la pression d'éclatement, le coût et la masse de la couche de carcasse:
- la couche de carcasse présente une résistance à la rupture supérieure ou égale à 1600 daN/mm, de préférence supérieure ou égale à 1800 daN/mm.
- la couche de carcasse présente une résistance à la rupture inférieure ou égale à 2300 daN/mm, de préférence inférieure ou égale à 2100 daN/mm.

Dans des modes de réalisation préférés permettant d'alléger le pneumatique, chaque élément de renfort filaire de sommet et de carcasse comprend un assemblage de plusieurs monofilaments élémentaires textiles.

Dans un mode de réalisation préféré, les éléments de renfort filaires de sommet et de carcasse sont identiques et, afin de différencier les résistances à la rupture de la couche de sommet et de la couche de carcasse, le rapport de la densité d'éléments de renfort filaires de sommet sur la densité d'éléments de renfort filaires de carcasse est strictement supérieur à 1, de préférence va de 1,10 à 1,45 et plus préférentiellement de 1,25 à 1,35.

Par monofilament élémentaire, on entend un filament monolithique réalisé dans un matériau donné et issu, par exemple du filage de ce matériau, par exemple par filage au fondu, filage en solution ou filage de gel. Les monofilaments élémentaires présentent typiquement des diamètres allant de 2 µm à 0,50 mm. Les monofilaments élémentaires sont assemblés sous la forme de brins comprenant au moins 2 monofilaments élémentaires, typiquement plus de 10 monofilaments élémentaires, de préférence plus de 100 monofilaments élémentaires et plus préférentiellement plus de 200 monofilaments élémentaires. Par monofilament élémentaires textile, on entend un monofilament élémentaire non métallique.

Dans une première variante de la couche de sommet dans le cas où la condition I est satisfaite et dans une première variante de la couche de carcasse dans le cas où la condition Il est satisfaite, chaque élément de renfort filaire de la couche de sommet dans le cas où la condition I est satisfaite ou de la couche de carcasse dans le cas où la condition Il est satisfaite comprend un assemblage de plusieurs monofilaments élémentaires textiles choisis parmi les monofilaments élémentaires de polyamide aliphatique, les monofilaments élémentaires de polyester ou les monofilaments élémentaires de dérivés cellulosiques et les assemblages de ces monofilaments élémentaires, de préférence choisis parmi les monofilaments élémentaires de polyamide aliphatique, les monofilaments élémentaires de polyester et les assemblages de ces monofilaments élémentaires. Ces premières variantes permettent d'éviter l'utilisation de monofilaments élémentaires à haut module et donc relativement coûteux tout en empêchant le pneumatique de s'étendre radialement que ce soit lors de l'application de la pression de gonflage ou lors d'un roulage à haute vitesse.

Dans une deuxième variante de la couche de sommet dans le cas où la condition I est satisfaite et dans une deuxième variante de la couche de carcasse dans le cas où la condition Il est satisfaite, chaque élément de renfort filaire de la couche de sommet dans le cas où la condition I est satisfaite ou de la couche de carcasse dans le cas où la condition Il est satisfaite comprend un assemblage de plusieurs monofilaments élémentaires textiles choisis parmi les monofilaments élémentaires de polyamide aromatique et les assemblages de ces monofilaments élémentaires de polyamide aromatique avec des monofilaments élémentaires textiles différents des monofilaments élémentaires textiles de polyamide aromatique. Ces deuxièmes variantes permettent d'améliorer significativement la résistance au roulement du pneumatique. En effet, de tels éléments de renfort filaires présentent un module relativement élevé qui permet de limiter la flèche du pneumatique. Le module de chaque élément de renfort filaire sera facilement déterminé par l'homme du métier d'une part, en fonction du compromis entre la résistance au roulement et le coût du pneumatique et, d'autre part, en fonction des autres éléments d'architecture du pneumatique. Une flèche limitée permet d'assurer une bonne mise à plat du pneumatique dans l'aire de contact à la différence d'un pneumatique selon la première variante dans lequel, en raison d'éléments de renfort filaires présentant un module plus faible, le pneumatique est susceptible de cloquer sous la charge et donc de présenter une aire de contact irrégulière conduisant à une mise à plat moins bonne. Grâce à l'amélioration de la mise à plat dans la deuxième variante, on améliore significativement la résistance au roulement du pneumatique.

Les monofilaments élémentaires textiles différents des monofilaments élémentaires textiles de polyamide aromatique sont préférentiellement choisis parmi les monofilaments élémentaires de polyamide aliphatique et les monofilaments élémentaires de polyester.

Avantageusement, les éléments de renfort filaires de chaque couche sont noyés dans une matrice élastomérique. Les différentes couches peuvent comprendre la même matrice élastomérique ou bien des matrices élastomériques distinctes.

Par matrice élastomérique, on entend une matrice présentant, à l'état réticulé, un comportement élastomérique. Une telle matrice est avantageusement obtenue par réticulation d'une composition comprenant au moins un élastomère et au moins un autre composant. De préférence, la composition comprenant au moins un élastomère et au moins un autre composant comprend un élastomère, un système de réticulation et une charge. Les compositions utilisées pour ces couches sont des compositions conventionnelles pour calandrage de renforts, typiquement à base de caoutchouc naturel ou autre élastomère diénique, d'une charge renforçante telle que du noir de carbone, d'un système de vulcanisation et des additifs usuels. L'adhésion entre les éléments de renfort filaires et la matrice dans laquelle ils sont noyés est assurée par exemple par une composition adhésive usuelle, par exemple une colle du type RFL ou colle équivalente.

Dans un mode de réalisation définissant un mode d'ancrage de la couche de carcasse dans chaque bourrelet du pneumatique, chaque bourrelet comprend un élément de renfort circonférentiel et dans lequel la couche de carcasse comprend:
- une portion axialement intérieure s'étendant depuis le plan médian du pneumatique en passant par un des flancs jusque dans le bourrelet radialement intérieurement à l'élément de renfort circonférentiel, et
- une portion axialement extérieure agencée axialement à l'extérieur de la portion axialement intérieure et s'étendant depuis le bourrelet radialement intérieurement à l'élément de renfort circonférentiel jusqu'à un des bords axiaux de la couche de carcasse,
les portions axialement intérieure et axialement extérieure étant agencées de façon à ce que la couche de carcasse soit enroulée autour de l'élément de renfort circonférentiel. D'autres modes d'ancrage de la couche de carcasse 34 sont possibles, par exemple comme décrit dans US5702548.

Dans un premier mode de réalisation permettant de réduire la masse du pneumatique en réduisant la masse de la portion axialement extérieure de couche de carcasse, le bord axial de la couche de carcasse est situé radialement à l'intérieur de l'équateur du pneumatique et, de préférence, situé radialement à l'intérieur de l'équateur du pneumatique à une distance radiale de l'équateur supérieure ou égale à 50% de la distance radiale entre l'équateur et le point le plus radialement intérieur du pneumatique.

Dans une variante préférée de ce premier mode de réalisation, la direction principale de chaque élément de renfort filaire de carcasse, forme, avec la direction circonférentielle du pneumatique, dans au moins une portion de la portion axialement intérieure de la couche de carcasse s'étendant radialement dans chaque flanc, un angle ACF, allant, en valeur absolue, de 80° à 90°. L'angle ACF permet de conférer au pneumatique selon l'invention les mêmes avantages que ceux conféré par la couche de carcasse du pneumatique de type radial. Ainsi, l'invention utilise la variation de l'angle formé par la direction principale des éléments de renfort filaires de carcasse selon que l'on se trouve à l'aplomb radial de la couche de sommet ou dans chaque flanc pour obtenir un pneumatique peu coûteux et capable de maintenir sa dimension radiale attendue sans renoncer pour autant aux avantages d'un pneumatique de type radial.

Dans des variantes du premier mode de réalisation dans lesquelles la direction principale de chaque élément de renfort filaire de carcasse présente, entre les portions, des zones de transition où l'angle est sensiblement variable, chaque portion de la portion axialement intérieure de la couche de carcasse s'étendant radialement dans chaque flanc et dont on caractérise l'angle ACF présente une hauteur curviligne selon la direction radiale égale à au moins 5%, de préférence au moins 15% et plus préférentiellement au moins 30% de la hauteur curviligne selon la direction radiale de la portion de la portion axialement interne de la couche de carcasse ne présentant aucune portion de couche de sommet ou de carcasse axialement en regard.

Dans des variantes du premier mode de réalisation dans lesquelles la direction principale de chaque élément de renfort filaire de carcasse présente, entre les portions, des zones de transition où l'angle est sensiblement variable, chaque portion de la portion axialement intérieure de la couche de carcasse s'étendant radialement dans chaque flanc et dont on caractérise l'angle ACF présente une hauteur curviligne selon la direction radiale égale à au plus 80%, de préférence au plus 70% de la hauteur curviligne selon la direction radiale de la portion de la portion axialement interne de la couche de carcasse ne présentant aucune portion de couche de sommet ou de carcasse axialement en regard.

Dans un deuxième mode de réalisation permettant d'améliorer la rigidité de dérive par rapport au premier mode de réalisation, le bord axial de la couche de carcasse est situé radialement à l'extérieur de l'équateur du pneumatique et de préférence situé radialement à l'extérieur de l'équateur du pneumatique à une distance radiale de l'équateur inférieure ou égale à 50% de la distance radiale entre l'équateur et le point le plus radialement extérieur du pneumatique et plus préférentiellement est intercalé radialement entre la portion axialement intérieure de la couche de carcasse et la couche de sommet ou agencé radialement à l'extérieur de la couche de sommet.

Dans une variante préférée de ce deuxième mode de réalisation permettant d'augmenter encore davantage la rigidité de dérive, la direction principale de chaque élément de renfort filaire de carcasse, forme, avec la direction circonférentielle du pneumatique, dans au moins une portion de chaque portion axialement intérieure et axialement extérieure de la couche de carcasse s'étendant radialement dans chaque flanc, un angle ACF, en valeur absolue, allant de 50° à 90°.

Dans des variantes du deuxième mode de réalisation dans lesquelles la direction principale de chaque élément de renfort filaire de carcasse présente, entre les portions, des zones de transition où l'angle est sensiblement variable, la portion de chaque portion axialement intérieure et axialement extérieure de la couche de carcasse s'étendant radialement dans chaque flanc et dont on caractérise l'angle ACF présente une hauteur curviligne selon la direction radiale égale à au moins 50%, de préférence au moins 60% et plus préférentiellement au moins 70% de la hauteur curviligne selon la direction radiale de la portion de la portion axialement externe de la couche de carcasse au contact de la portion axialement interne de la couche de carcasse.

Dans des variantes du deuxième mode de réalisation dans lesquelles la direction principale de chaque élément de renfort filaire de carcasse présente, entre les portions, des zones de transition où l'angle est sensiblement variable, chaque portion de la portion axialement intérieure de la couche de carcasse s'étendant radialement dans chaque flanc et dont on caractérise l'angle ACF présente une hauteur curviligne selon la direction radiale égale à au plus 100%, de préférence au plus 90% et plus préférentiellement au plus 80% de la hauteur curviligne selon la direction radiale de la portion de la portion axialement externe de la couche de carcasse au contact de la portion axialement interne de la couche de carcasse.

Par hauteur curviligne selon la direction radiale, on entend la hauteur mesurée dans un plan de coupe méridien en suivant la courbure de ladite couche, par exemple en suivant une ligne courbe passant au milieu de l'épaisseur radiale de ladite couche. Cette hauteur est dite curviligne par opposition à la hauteur droite qui elle serait mesurée entre les deux extrémités de la portion parallèlement à la direction radiale du pneumatique.

Que ce soit dans le premier ou le deuxième mode de réalisation décrit ci-dessus, le pneumatique selon l'invention présente un confort amélioré par rapport au pneumatique de type bias. Les inventeurs expliquent cela par le fait que, dans un pneumatique de type bias, le cisaillement entre les deux couches est relativement important et engendre une rigidité verticale relativement élevée. Au contraire, le pneumatique selon l'invention, bien que présentant un angle ACF plus proche de la direction radiale que dans un pneumatique de type bias, ne comprend qu'une unique couche de carcasse ce qui supprime le cisaillement présent dans le pneumatique de type bias et donc réduit significativement la rigidité verticale.

Un autre objet de l'invention est un procédé de fabrication d'un pneumatique tel que défini ci-dessus dans lequel:
- on forme par enroulement d'une nappe de carcasse ou de plusieurs nappes de carcasse autour d'un support présentant une forme sensiblement cylindrique autour d'un axe principal, un ensemble de carcasse enroulé délimité axialement par deux bords axiaux de l'ensemble de carcasse enroulé et comprenant les éléments de renfort filaires de carcasse s'étendant sensiblement parallèlement les uns aux autres axialement d'un bord axial à l'autre bord axial de l'ensemble de carcasse enroulé, chaque élément de renfort filaire de carcasse s'étendant, dans la ou chaque nappe de carcasse, selon une direction principale de chaque élément de renfort filaire de carcasse dans la ou chaque nappe de carcasse formant, avec la direction circonférentielle du support, un angle initial A3 de chaque élément de renfort filaire de carcasse, l'ensemble de carcasse enroulé étant destiné à former l'unique couche de carcasse,
- on forme par enroulement d'une nappe de sommet ou de plusieurs nappes de sommet, radialement à l'extérieur de l'ensemble de carcasse enroulé, un ensemble de sommet enroulé délimité axialement par deux bords axiaux de l'ensemble de sommet enroulé et comprenant les éléments de renfort filaires de sommet s'étendant sensiblement parallèlement les uns aux autres axialement d'un bord axial à l'autre bord axial de l'ensemble de sommet enroulé, chaque élément de renfort filaire de sommet s'étendant, dans la ou chaque nappe de sommet, selon une direction principale de chaque élément de renfort filaire de sommet dans la ou chaque nappe de sommet formant, avec la direction circonférentielle du support, un angle initial A2 de chaque élément de renfort filaire de sommet, l'ensemble de sommet enroulé étant destiné à former l'unique couche de sommet, l'ensemble de carcasse enroulé et l'ensemble de sommet enroulé formant un assemblage de forme sensiblement cylindrique autour d'un axe principal de l'assemblage sensiblement confondu avec l'axe principal du support,
procédé dans lequel on déforme l'assemblage de forme sensiblement cylindrique autour de l'axe principal de l'assemblage de façon à obtenir un assemblage de forme sensiblement torique autour de l'axe principal de l'assemblage de sorte que, postérieurement à l'étape de déformation :
- la direction principale de chaque élément de renfort filaire de sommet forme, avec la direction circonférentielle de l'assemblage, un angle final B2 de chaque élément de renfort filaire de sommet,
- la direction principale de chaque élément de renfort filaire de carcasse forme, avec la direction circonférentielle de l'assemblage, un angle final B3S de chaque élément de renfort filaire de carcasse, dans une portion de l'ensemble de carcasse enroulé s'étendant axialement à l'aplomb radial de l'ensemble de sommet enroulé,
procédé dans lequel, postérieurement à l'étape de déformation, l'angle B2 et l'angle B3S sont différents en valeurs absolues et d'orientations opposées et de sorte que l'une ou l'autre des conditions El ou EII est satisfaite :
El - l'angle B2 va, en valeur absolue, de 10° à 25° et l'angle B3S va, en valeur absolue, de 20° à 65° dans la portion de l'ensemble de carcasse enroulé s'étendant axialement à l'aplomb radial de l'ensemble de sommet enroulé,
EII - l'angle B2 va, en valeur absolue, de 20° à 65° et l'angle B3S va, en valeur absolue, de 10° à 25° dans la portion de l'ensemble de carcasse enroulé s'étendant axialement à l'aplomb radial de l'ensemble de sommet enroulé.

Grâce au procédé selon l'invention, on permet l'obtention d'angle finaux B2 et B3 différents et ayant des valeurs absolues permettant, comme expliqué précédemment, de maintenir la dimension radiale attendue du pneumatique. En outre, grâce à l'étape de déformation commune des ensembles de carcasse et de sommet, on réduit le temps de fabrication par rapport à un procédé de fabrication d'un pneumatique de type radial.

Dans le procédé selon l'invention, les angles initiaux A2 et A3 varient lors de l'étape de déformation pour atteindre leurs angles finaux B2 et B3S, à l'exception de la portion de l'ensemble de carcasse enroulé enroulée autour des éléments de renfort circonférentiels dans laquelle la direction principale des éléments de renfort filaires de carcasse reste sensiblement identique par rapport à la direction circonférentielle du support et donc du pneumatique. La variation de l'angle formé avec la direction circonférentielle du support par la direction principale des éléments de renfort filaires de carcasse entraine une variation de l'angle formé par la direction principale des éléments de renfort filaires de sommet avec la direction circonférentielle du support, cette variation étant différente selon que l'on se trouve dans la portion de l'ensemble de carcasse enroulé s'étendant axialement à l'aplomb radial de l'ensemble de sommet enroulé ou que l'on se trouve dans la portion de l'ensemble de carcasse destinée à s'étendre radialement dans chaque flanc.

La variation des angles initiaux A2 et A3 est déterminable par l'homme du métier en fonction du taux de déformation utilisé lors du procédé. Le taux de déformation est déterminé de façon connue par l'homme du métier en fonction du rapprochement axial des bords axiaux de l'ensemble de carcasse enroulé et de l'agrandissement radial de l'assemblage entre sa forme cylindrique et sa forme torique. La détermination des angles initiaux en fonction des angles finaux dépend, de façon connue de l'homme du métier, du taux de déformation comme cela est expliqué dans FR2797213 et dans FR1413102.

L'ensemble de carcasse est destiné à former l'unique couche de carcasse en enroulant cet ensemble de carcasse sur au plus un tour complet. De façon analogue, l'ensemble de sommet est destiné à former l'unique couche de sommet en enroulant cet ensemble de sommet sur au plus un tour complet autour de l'ensemble de carcasse.

Dans un procédé simplifié dans lequel on n'a à manipuler qu'une nappe de carcasse pour former l'ensemble de carcasse enroulé et dans lequel on éviterait des jonctions circonférentielles entre plusieurs nappes de carcasse de largeurs axiales inférieures à la largeur axiale de l'ensemble de carcasse enroulé destiné à être formé, l'ensemble de carcasse enroulé est constitué d'une nappe de carcasse qui est destinée à former la couche de carcasse. En d'autres termes, la nappe de carcasse est axialement continue.

Dans le cas où on forme l'ensemble de carcasse enroulé avec plusieurs nappes de carcasse, on utilisera préférentiellement plusieurs nappes de carcasse dans lesquelles les directions principales des éléments de renfort filaires de carcasse sont toutes parallèles les unes aux autres.

De façon analogue, dans un procédé simplifié dans lequel on n'a à manipuler qu'une nappe de sommet pour former l'ensemble de sommet enroulé et dans lequel on éviterait des jonctions circonférentielles entre plusieurs nappes de sommet de largeurs axiales inférieures à la largeur axiale de l'ensemble de sommet enroulé destiné à être formé, l'ensemble de sommet enroulé est constitué d'une nappe de sommet qui est destinée à former l'unique couche de sommet. En d'autres termes, la nappe de sommet est axialement continue.

Dans le cas où on forme l'ensemble de sommet enroulé avec plusieurs nappes de sommet, on utilisera préférentiellement plusieurs nappes de sommet dans lesquelles les directions principales des éléments de renfort filaires de sommet sont toutes parallèles les unes aux autres. Bien entendu, on pourra envisager des directions principales des éléments de renfort filaires de sommet non parallèles les unes aux autres d'une nappe sommet à l'autre.

Dans un mode de réalisation, avant l'étape de déformation de l'assemblage de forme sensiblement cylindrique de façon à obtenir l'assemblage de forme sensiblement torique, on forme par enroulement d'une nappe de roulement ou de plusieurs nappes de roulement, radialement à l'extérieur de l'ensemble de sommet enroulé, un ensemble de roulement enroulé destiné à former la bande de roulement.

Dans un procédé simplifié dans lequel on n'a à manipuler qu'une nappe de roulement pour former l'ensemble de roulement enroulé et dans lequel on éviterait des jonctions circonférentielles entre plusieurs nappes de roulement de largeurs axiales inférieures à la largeur axiale de l'ensemble de roulement enroulé destiné à être formé, l'ensemble de roulement enroulé est constitué d'une nappe de roulement qui est destinée à former la bande de roulement. En d'autres termes, la nappe de roulement est axialement continue.

Dans un mode de réalisation permettant de réduire encore davantage le coût et le temps de cycle du procédé, l'étape de déformation de l'assemblage de forme sensiblement cylindrique de façon à obtenir l'assemblage de forme sensiblement torique est réalisée dans un moule de réticulation de l'assemblage. Au cours du procédé, on forme une ébauche crue du pneumatique destinée à être réticulée dans le moule de réticulation. L'ébauche crue est formée à partir de l'assemblage décrit ci-dessus comprenant notamment l'ensemble de roulement enroulé. Afin de mouler les éléments de sculptures du pneumatique, on positionne l'ébauche crue dans le moule de réticulation et on met sous pression une paroi radialement interne de l'ébauche crue, par exemple au moyen d'une membrane déformable, de façon à plaquer une paroi radialement externe de l'ébauche crue contre une paroi interne du moule de réticulation. Dans ce mode de réalisation, on profite ainsi de la déformation engendrée par l'étape de moulage pour déformer l'assemblage depuis sa forme sensiblement cylindrique vers sa forme sensiblement torique. Ainsi, on évite l'utilisation d'un support de fabrication déformable entre une forme sensiblement cylindrique et une forme torique ainsi que la réalisation d'une étape de déformation superflue au moyen de ce support déformable. Dans ce mode de réalisation, les angles finaux formés par la direction principale de chaque élément de renfort filaire avec la direction circonférentielle de l'assemblage sont sensiblement égaux aux angles formés par la direction principale de chaque élément de renfort filaire avec la direction circonférentielle du pneumatique une fois ce dernier fabriqué. Ainsi, on a B2=AT, B3S=ACS et B3F=ACF.

Dans un autre mode de réalisation, l'étape de déformation de l'assemblage de forme sensiblement cylindrique de façon à obtenir l'assemblage de forme sensiblement torique est réalisée sur le support, les angles finaux formés par la direction principale de chaque élément de renfort filaire avec la direction circonférentielle de l'assemblage étant, en valeur absolue, strictement supérieurs aux angles formés par la direction principale de chaque élément de renfort filaire avec la direction circonférentielle du pneumatique une fois ce dernier fabriqué. Ainsi, on a B2>AT, B3S>ACS et B3F>ACF. Puis, ultérieurement, on forme une ébauche crue du pneumatique destinée à être réticulée dans le moule de réticulation. L'ébauche crue est formée à partir de l'assemblage décrit ci-dessus et comprend notamment l'ensemble de roulement enroulé. Le procédé comprend ultérieurement une étape de moulage de l'ébauche crue menée de façon à obtenir les angles finaux AT, ACS, ACF, par exemple, au moyen d'une membrane déformable.

Quel que soit le mode de réalisation et de façon à fabriquer un pneumatique conforme à l'invention, le procédé comprend une étape de moulage d'une ébauche crue formée à partir de l'assemblage de forme sensiblement torique menée de façon à obtenir, postérieurement à l'étape de moulage, les angles AT, ACS et ACF.

Dans un mode de réalisation permettant d'augmenter à moindre coût la résistance mécanique de la couche de sommet, l'ensemble de sommet enroulé présentant une densité initiale d'éléments de renfort filaires de sommet au début de l'étape de déformation et une densité finale d'éléments de renfort filaires de sommet à la fin de l'étape de déformation, l'étape de déformation est réalisée de sorte que la densité finale d'éléments de renfort filaires de sommet est strictement supérieure à la densité initiale d'éléments de renfort filaires de sommet. En effet, comme expliqué précédemment, lors de l'étape de déformation, il se produit une densification de l'ensemble de sommet enroulé de sorte qu'il est possible de former une couche de sommet présentant une résistance mécanique relativement élevée à partir d'une ou de plusieurs nappes de sommet présentant une densité d'éléments de renfort filaires de sommet relativement faible. Plus la densification est importante, plus le gain est important.

De façon analogue, dans un mode de réalisation permettant d'augmenter à moindre coût la résistance mécanique de la couche de carcasse, l'ensemble de carcasse enroulé présentant une densité initiale d'éléments de renfort filaires de carcasse au début de l'étape de déformation et une densité finale d'éléments de renfort filaires de carcasse à la fin de l'étape de déformation, l'étape de déformation est réalisée de sorte que la densité finale d'éléments de renfort filaires de carcasse est strictement supérieure à la densité initiale d'éléments de renfort filaires de carcasse.

De préférence, afin d'éviter de dépasser une valeur de densification au-delà de laquelle les éléments de renfort filaires de sommet ou de carcasse viennent au contact les uns des autres et empêcherait l'achèvement de l'étape de déformation et l'atteinte de l'angle AT ou ACS allant de 10° à 25°, l'étape de déformation est réalisée de sorte que, lors de l'étape de déformation :
- dans le cas où la condition El est satisfaite, la densité d'éléments de renfort filaires de sommet diminue depuis la densité initiale d'éléments de renfort filaires de sommet pour atteindre une densité minimale d'éléments de renfort filaires de sommet strictement inférieure à la densité initiale d'éléments de renfort filaires de sommet, puis la densité d'éléments de renfort filaires de sommet augmente depuis la densité minimale d'éléments de renfort filaires de sommet pour atteindre la densité finale d'éléments de renfort filaires de sommet,
- dans le cas où la condition EII est satisfaite, la densité d'éléments de renfort filaires de carcasse diminue depuis la densité initiale d'éléments de renfort filaires carcasse pour atteindre une densité minimale d'éléments de renfort filaires de carcasse strictement inférieure à la densité initiale d'éléments de renfort filaires de carcasse, puis la densité d'éléments de renfort filaires de carcasse augmente depuis la densité minimale d'éléments de renfort filaires de carcasse pour atteindre la densité finale d'éléments de renfort filaires de carcasse.

Les inventeurs ont découvert que, en choisissant des angles A2 et A3 séparés d'un écart angulaire suffisant, et plus précisément strictement supérieur à 90°, lors de l'étape de déformation, on avait une première phase de dé-densification de l'ensemble de sommet enroulé jusqu'à l'atteinte d'un écart angulaire égal à 90°, puis une deuxième phase de densification de l'ensemble de sommet enroulé jusqu'à l'atteinte de l'angle final. Plus l'écart angulaire est important, plus la première phase de dé-densification est importante. Ainsi, en fonction de l'angle AT ou ACS visé dans l'intervalle allant de 10° à 25°, l'homme du métier choisira l'écart angulaire permettant la dé-densification suffisante pour d'une part éviter la mise en contact des éléments de renfort filaires de sommet ou de carcasse et d'autre part obtenir une couche de sommet présentant une résistance mécanique suffisante lors de la deuxième phase de densification.

Dans une variante préférée permettant de limiter le risque de mise en contact des éléments de renfort filaires de sommet ou de carcasse lors de la deuxième phase de densification :
- dans le cas où la condition El est satisfaite, le rapport entre la densité finale d'éléments de renfort filaires de sommet et la densité initiale d'éléments de renfort filaires de sommet est inférieure ou égale à 1,30, de préférence inférieure ou égale à 1,25,
- dans le cas où la condition EII est satisfaite, le rapport entre la densité finale d'éléments de renfort filaires de carcasse et la densité initiale d'éléments de renfort filaires de carcasse est inférieure ou égale à 1,30, de préférence inférieure ou égale à 1,25.

De façon avantageuse, afin d'avoir une dé-densification suffisante pour d'une part éviter la mise en contact des éléments de renfort filaires de sommet ou de carcasse et d'autre part obtenir une couche de sommet présentant une résistance mécanique suffisante lors de la deuxième phase de densification, la somme des valeurs absolues de l'angle initial A2 et de l'angle initial A3 est strictement supérieure à 90°, de préférence va de 95° à 120° et plus préférentiellement de 100° à 115°.

Dans ce qui précède, afin de constater la diminution ou l'augmentation de la densité d'éléments de renfort filaires, on considérera cette densité mesurée sur l'ensemble de sommet et sur l'ensemble de carcasse agencée à l'aplomb radiale de l'ensemble de sommet. Cette densité, est de façon analogue à la densité mesurée sur chaque nappe non déformée, la densité d'éléments de renfort filaires par unité de largeur curviligne de l'ensemble considéré, c'est-à-dire, en tenant compte de la courbure de l'ébauche lors de l'étape de déformation, ici par le nombre d'éléments de renfort filaires par mm d'ensemble, ce nombre étant déterminé selon une direction perpendiculaire à la direction selon laquelle les éléments de renfort filaires s'étendent dans l'ensemble.

Dans un premier mode de réalisation du procédé permettant de fabriquer un pneumatique selon le premier mode de réalisation décrit ci-dessus, on déforme l'assemblage de forme sensiblement cylindrique de façon à obtenir l'assemblage de forme sensiblement torique de sorte que, postérieurement à l'étape de déformation, la direction principale de chaque élément de renfort filaire de carcasse forme, avec la direction circonférentielle de l'assemblage, un angle final B3F allant, en valeur absolue, de 80° à 90°, dans une portion de l'ensemble de carcasse enroulé destinée à former au moins une portion de la portion axialement intérieure de la couche de carcasse destinée à s'étendre radialement dans chaque flanc.

Dans un deuxième mode de réalisation du procédé permettant de fabriquer un pneumatique selon le deuxième mode de réalisation décrit ci-dessus, on déforme l'assemblage de forme sensiblement cylindrique de façon à obtenir l'assemblage de forme sensiblement torique de sorte que, postérieurement à l'étape de déformation, la direction principale de chaque élément de renfort filaire de carcasse forme, avec la direction circonférentielle de l'assemblage:
- un angle final B3F, en valeur absolue, allant de 50° à 90°, dans une portion de l'ensemble de carcasse enroulé destinée à former au moins une portion de la portion axialement intérieure de la couche de carcasse destinée à s'étendre radialement dans chaque flanc,
- un angle final B3F', en valeur absolue, allant de 50° à 90°, dans une portion de l'ensemble de carcasse enroulé destinée à former au moins une portion de la portion axialement extérieure de la couche de carcasse destinée à s'étendre radialement dans chaque flanc.

Dans une variante permettant de fabriquer la variante préférée du premier mode de réalisation décrite précédemment et dans laquelle le pneumatique présente les avantages d'un pneumatique de type radial :
- dans le cas où la condition El est satisfaite, l'angle initial A2 est, en valeur absolue, supérieur ou égal à 20°, et de préférence va de 25° à 50° et l'angle initial A3 va, en valeur absolue, de 80° à 90°, et
- dans le cas où la condition EII est satisfaite, l'angle initial A2 va, en valeur absolue, de 80° à 90° et l'angle initial A3 est, en valeur absolue, supérieur ou égal à 20°, et de préférence va de 25° à 50°.

Dans cette variante, on forme l'ensemble de sommet enroulé ou l'ensemble de carcasse enroulé en minimisant la longueur des jonctions lors de l'enroulage de la ou des nappes coupées à angles grâce à un angle suffisamment grand, c'est-à-dire supérieur ou égal à 25°, et d'autre part, on forme l'ensemble de carcasse enroulé ou l'ensemble de sommet enroulé à partir d'une ou de nappes ne nécessitant pas de coupe à angle et d'aboutage grâce à un angle le plus proche possible de 90°, c'est-à-dire allant de 80° à 90 . Cette variante permet de réduire le plus possible le coût du procédé en limitant le temps de cycle nécessaire à la formation des ensembles enroulés.

Afin d'atteindre facilement les angles AT et ACS, cette variante est très préférentiellement mise en oeuvre dans le cas où la condition El est satisfaite.

Dans une autre variante permettant de fabriquer la variante préférée du deuxième mode de réalisation décrite précédemment et dans laquelle on obtient une rigidité de dérive améliorée :
- dans le cas où la condition El est satisfaite, l'angle initial A2 est, en valeur absolue, supérieur ou égal à 20°, et de préférence va de 25° à 50° et l'angle initial A3 est, en valeur absolue, supérieur ou égal à 50°, et de préférence va de 50° à 80°,
- dans le cas où la condition EII est satisfaite, l'angle initial A2 est, en valeur absolue, supérieur ou égal à 50°, et de préférence va de 50° à 80° et l'angle initial A3 est, en valeur absolue, supérieur ou égal à 20°, et de préférence va de 25° à 50°.

Dans cette autre variante, on forme l'ensemble de sommet enroulé ou l'ensemble de carcasse enroulé en minimisant la longueur des jonctions lors de l'enroulage de la ou des nappes coupées à angles grâce à un angle suffisamment grand, c'est-à-dire supérieur ou égal à 25°, et d'autre part, on forme l'ensemble de carcasse enroulé ou l'ensemble de sommet enroulé de façon à obtenir un angle final relativement modéré dans chaque flanc afin d'augmenter le plus possible la rigidité de dérive comme le montrent les tests comparatifs décrits ci-dessous.

Afin d'atteindre facilement les angles AT et ACS, cette autre variante est très préférentiellement mise en oeuvre dans le cas où la condition El est satisfaite.

Dans un mode de réalisation permettant d'ancrer facilement l'armature de carcasse dans chaque bourrelet, postérieurement à l'étape de formation du ou d'au moins un des ensemble(s) de carcasse enroulé(s) :
- on agence deux éléments de renfort circonférentiels autour du ou d'au moins un des ensemble(s) de carcasse enroulé(s), puis
- on retourne axialement vers l'intérieur chaque bord axial de l'ensemble de carcasse enroulé de façon à recouvrir radialement chaque élément de renfort circonférentiel par un des bords axiaux de l'ensemble de carcasse enroulé et ce que l'ensemble de carcasse enroulé soit enroulée autour de chaque élément de renfort circonférentiel, puis
- on déforme l'assemblage de forme sensiblement cylindrique de façon à obtenir l'assemblage de forme sensiblement torique.

L'invention ainsi que ses avantages seront aisément compris à la lumière de la description détaillée et des exemples de réalisation non limitatifs qui suivent, ainsi que des figures 1 à 16 relatives à ces exemples dans lesquels :
- la figure 1 est une vue en coupe dans un plan de coupe méridien d'un pneumatique selon un premier mode de réalisation de l'invention,
- la figure 2 est une vue schématique en arraché du pneumatique de la figure 1 illustrant l'agencement des éléments de renfort filaires des couches de sommet et de carcasse à l'aplomb radial de la couche de sommet,
- la figure 3 est une vue schématique des éléments de renfort filaires de carcasse agencés dans le flanc du pneumatique de la figure 1,
- les figures 4 à 12 illustrent les différentes étapes d'un procédé selon un premier mode de réalisation de l'invention permettant de fabriquer le pneumatique de la figure 1,
- la figure 13 est une vue analogue à celle de la figure 1 d'un pneumatique selon un deuxième mode de réalisation de l'invention, et
- les figures 14 à 16 illustrent, de façon analogue aux figures 8, 10 et 12, les différentes étapes d'un procédé selon un deuxième mode de réalisation de l'invention permettant de fabriquer le pneumatique de la figure 13.

Dans les figures relatives au pneumatique, on a représenté un repère X, Y, Z correspondant aux directions habituelles respectivement axiale (X), radiale (Y) et circonférentielle (Z) d'un pneumatique. Dans les figures relatives au procédé, on a représenté un repère x, y, z correspondant aux directions habituelles respectivement axiale (x), radiale (y) et circonférentielle (z) d'un support de fabrication présentant une forme sensiblement cylindrique autour d'un axe principal A. Ces directions respectivement axiale (x), radiale (y) et circonférentielle (z) sont également utilisées pour faire référence aux directions respectivement axiale (x), radiale (y) et circonférentielle (z) d'une ébauche crue et de l'assemblage présentant des formes sensiblement cylindriques et toriques autour d'un axe principal A'.

On a représenté sur la figure 1 un pneumatique, conforme à l'invention et désigné par la référence générale 10. Le pneumatique 10 est sensiblement de révolution autour d'un axe sensiblement parallèle à la direction axiale X. Le pneumatique 10 est ici destiné à une motocyclette et présente des dimensions 90/90 - 14. Etant destiné à une motocyclette, le pneumatique est notamment caractérisé par un taux de courbure allant de 0,15 à 0,50, de préférence allant de 0,20 à 0,40 et ici égal à 0,37.

Le pneumatique 10 comprend un sommet 12 comprenant une bande de roulement 20 destinée à venir en contact avec un sol lors du roulage et une armature de sommet 14 s'étendant dans le sommet 12 selon la direction circonférentielle Z. Le pneumatique 10 comprend également une couche d'étanchéité 15 à un gaz de gonflage étant destiné à délimiter une cavité interne fermée avec un support de montage du pneumatique 10 une fois le pneumatique 10 monté sur le support de montage, par exemple une jante. La couche d'étanchéité 15 comprend une composition élastomérique comprenant une matrice élastomérique comprenant au moins 50 pce d'un ou de plusieurs élastomères butyles.

L'armature de sommet 14 comprend une armature de sommet 16 comprenant une unique couche de sommet 18 et est, en l'espèce, constituée de l'unique couche de sommet 18. On parlera, par soucis de simplification de la couche de sommet 18 sans rappeler à chaque fois que cette couche est unique. L'armature de sommet 14 est surmontée radialement de la bande de roulement 20.

Le pneumatique 10 comprend deux flancs 22 prolongeant le sommet 12 radialement vers l'intérieur. Le pneumatique 10 comporte en outre deux bourrelets 24 radialement intérieurs aux flancs 22. Chaque flanc 22 relie chaque bourrelet 24 au sommet 12.

Chaque bourrelet 24 comprend au moins un élément de renfort circonférentiel 26, en l'occurrence une tringle 28 surmontée radialement d'une masse de gomme 30 de bourrage.

Le pneumatique 10 comprend une armature 32 de carcasse ancrée dans chaque bourrelet 24. L'armature 32 de carcasse s'étend dans chaque flanc 22 et radialement intérieurement au sommet 12. L'armature de sommet 14 est agencée radialement entre la bande de roulement 20 et l'armature de carcasse 32.

L'armature de carcasse 32 comprend une unique couche de carcasse 34 et en l'espèce, est constituée de l'unique couche de carcasse 34. On parlera, par soucis de simplification de la couche de carcasse 34 sans rappeler à chaque fois que cette couche est unique.

Chaque couche de sommet 18 et de carcasse 34 comprend une matrice élastomérique dans laquelle sont noyés un ou des éléments de renfort filaires de la couche correspondante. On va maintenant décrire ces couches en référence aux figures 1 à 3.

La couche de sommet 18 est délimitée axialement par deux bords axiaux 18A, 18B de la couche de sommet 18. La couche de sommet 18 comprend des éléments de renfort filaires de sommet 180 s'étendant axialement du bord axial 18A à l'autre bord axial 18B de la couche de sommet 18 les uns sensiblement parallèlement aux autres. Chaque élément de renfort filaire de sommet 180 s'étend selon une direction principale D2 de chaque élément de renfort filaire de sommet 180. La direction D2 forme, avec la direction circonférentielle Z du pneumatique 10, un angle AT, en valeur absolue, allant de 10° à 25°. Ici AT=15°.

La couche de carcasse 34 est délimitée axialement par deux bords axiaux 34A, 34B de la couche de carcasse 34. La couche de carcasse 34 comprend des éléments de renfort filaires de carcasse 340 s'étendant axialement du bord axial 34A à l'autre bord axial 34B de la couche de carcasse 34. Chaque élément de renfort filaire de carcasse 340 s'étend selon une direction principale D3 de chaque élément de renfort filaire de carcasse 340 formant, avec la direction circonférentielle Z du pneumatique 10 un angle ACS, en valeur absolue, allant de 20° à 65° et de préférence allant de 20° à 60° dans une portion 34S de la couche de carcasse 34 s'étendant axialement à l'aplomb radial de la couche de sommet 18. Ici, ACS=40°.

La portion 34S de la couche de carcasse 34 s'étendant axialement à l'aplomb de la couche de sommet 18 présente une largeur curviligne LS selon la direction axiale égale à au moins 30%, de préférence au moins 40% de largeur curviligne selon la direction axiale LA de la couche de sommet 18 et égale à au plus 90%, de préférence au plus 80% de la largeur curviligne selon la direction axiale LA de la couche de sommet 18. Ici LS/LA=0,75. Le plan médian M du pneumatique 10 coupe cette portion 34S. Plus préférentiellement, cette portion 34S est centrée axialement sur le plan médian M du pneumatique 10.

On notera que la somme des valeurs absolues des angles AT et ACS est strictement inférieure ou égale à 70°, de préférence inférieure ou égal à 60°, et plus préférentiellement allant de 40° à 60°. Ici, |AT| + |ACS|=55°.

La couche de carcasse 34 comprend une portion axialement intérieure 34I s'étendant depuis le plan médian M en passant par un des flancs 22 jusque dans le bourrelet 24 radialement intérieurement à l'élément de renfort circonférentiel 26. La couche de carcasse 34 comprend également une portion axialement extérieure 34E agencée axialement à l'extérieur de la portion axiale intérieure 34I et s'étendant depuis le bourrelet 24 radialement intérieurement à l'élément de renfort circonférentiel 26 jusqu'au bord 34A de la couche de carcasse 34. Les portions axialement intérieure 34I et axialement extérieure 34E sont agencées de façon à ce que la couche de carcasse 34 soit enroulée autour de chaque élément de renfort circonférentiel 26 de chaque bourrelet 24. La masse de gomme 30 de bourrage est intercalée axialement entre les portions axialement intérieure 34I et axialement extérieure 34E.

Dans ce premier mode de réalisation, le bord axial 34A de la couche de carcasse 34 est situé radialement à l'intérieur de l'équateur E du pneumatique 10 et, de préférence, situé radialement à l'intérieur de l'équateur E du pneumatique 10 à une distance radiale C1 de l'équateur E supérieure ou égale à 50% de la distance radiale E1 entre l'équateur et le point le plus radialement intérieur du pneumatique. En l'espèce, E1=50 mm et C1=30 mm.

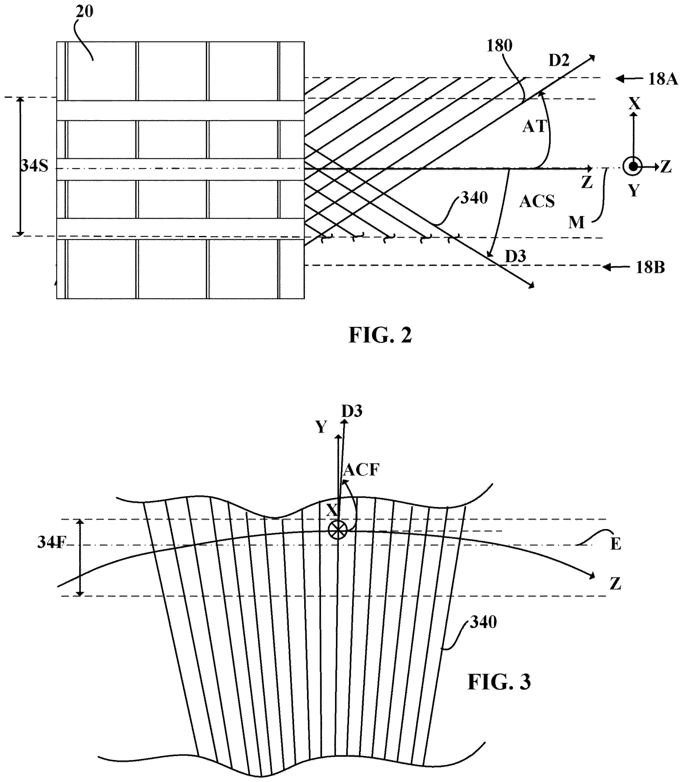

Comme illustré sur les figures 1 et 3, la direction principale D3 de chaque élément de renfort filaire de carcasse 340 forme, avec la direction circonférentielle Z du pneumatique 10, un angle ACF, en valeur absolue, allant de 80° à 90° dans au moins une portion 34F de la portion axialement intérieure 34I de la couche de carcasse 34 s'étendant radialement dans chaque flanc 22. Ici, ACF=90°.

Chaque portion 34F de la portion axialement intérieure 34I de la couche de carcasse 34 s'étendant radialement dans chaque flanc 22 présente une hauteur curviligne LF selon la direction radiale égale à au moins 5%, de préférence au moins 15% et plus préférentiellement au moins 30% de la hauteur curviligne LR selon la direction radiale de la portion 34L de la portion axialement interne 34I de la couche de carcasse 34 ne présentant aucune portion de couche de sommet 18 ou de carcasse 34 axialement en regard. Chaque portion 34F de la portion axialement intérieure 34I de la couche de carcasse 34 s'étendant radialement dans chaque flanc 22 présente une hauteur curviligne LF selon la direction radiale égale à au plus 90%, de préférence au plus 80% de la hauteur curviligne LR selon la direction radiale de la portion 34L de la portion axialement interne 34I de la couche de carcasse 34 ne présentant aucune portion de couche de sommet 18 ou de carcasse 34 axialement en regard. Ici, LF/LR=0,75.

La direction principale D3 de chaque élément de renfort filaire de carcasse 340 forme, avec la direction circonférentielle Z du pneumatique 10, un angle ACT, en valeur absolue, allant de 80° à 90°, dans la portion axialement extérieure 34E ainsi que dans une portion 34IT de la portion axialement intérieure 34I en regard axial de la portion axialement extérieure 34E.

Comme illustré sur la figure 2, les angles AT et ACS sont différents en valeur absolue et d'orientations opposées. En l'espèce, AT=-15° et ACS=+40°.

Les éléments de renfort filaires de sommet 180 et de carcasse 340 sont identiques. En l'espèce, chaque élément de renfort filaire de sommet 180 et de carcasse 340 comprend un assemblage de plusieurs monofilaments élémentaires textiles choisis parmi les monofilaments élémentaires de polyamide aliphatique, les monofilaments élémentaires de polyester ou les monofilaments élémentaires de dérivés cellulosiques et les assemblages de ces monofilaments élémentaires, de préférence choisis parmi les monofilaments élémentaires de polyamide aliphatique, les monofilaments élémentaires de polyester et les assemblages de ces monofilaments élémentaires. En l'espèce, chaque élément de renfort filaire de sommet 180 et de carcasse 340 est un assemblage de deux brins de polyéthylène téréphtalate de grade HMLS présentant chacun un titre égal à 144 tex et retordus individuellement à 420 tours/mètre dans un sens puis collectivement à 420 tours/mètre dans l'autre sens.

Le rapport de la densité d2 d'éléments de renfort filaires de sommet sur la densité d3 d'éléments de renfort filaires de carcasse est strictement supérieur à 1, de préférence va de 1,10 à 1,45 et plus préférentiellement de 1,25 à 1,35. Ici, d2/d3=1,29. En effet, la couche de sommet 18 présente une densité d2 d'éléments filaires de sommet 180 égale à 139 fils par décimètre de couche de sommet 18. La couche de carcasse 34 présente une densité d3 d'éléments filaires de carcasse 340 égale à 108 fils par décimètre de couche de carcasse 34.

La couche de sommet 18 présente une résistance à la rupture Rs supérieure ou égale à 1900 daN/dm, de préférence supérieure ou égale à 2300 daN/dm et inférieure ou égale à 2600 daN/dm. La couche de carcasse 34 présente une résistance à la rupture Rc supérieure ou égale à 1600 daN/mm, de préférence supérieure ou égale à 1800 daN/mm et inférieure ou égale à 2300 daN/mm, de préférence inférieure ou égale à 2100 daN/mm. En l'espèce, Rs=2475 daN/dm et Rc=1920 daN/dm. On notera que comme les éléments de renfort filaires de sommet 180 et de carcasse 340 sont identiques, les résistances mécaniques Rs et Rc vérifient également la condition selon laquelle le rapport de la résistance à la rupture Rs de la couche de sommet 18 sur la résistance à la rupture Rc de la couche de carcasse 34 est strictement supérieur à 1, de préférence va de 1,10 à 1,45 et plus préférentiellement de 1,25 à 1,35. Ici Rs/Rc=d2/d3=1,29.

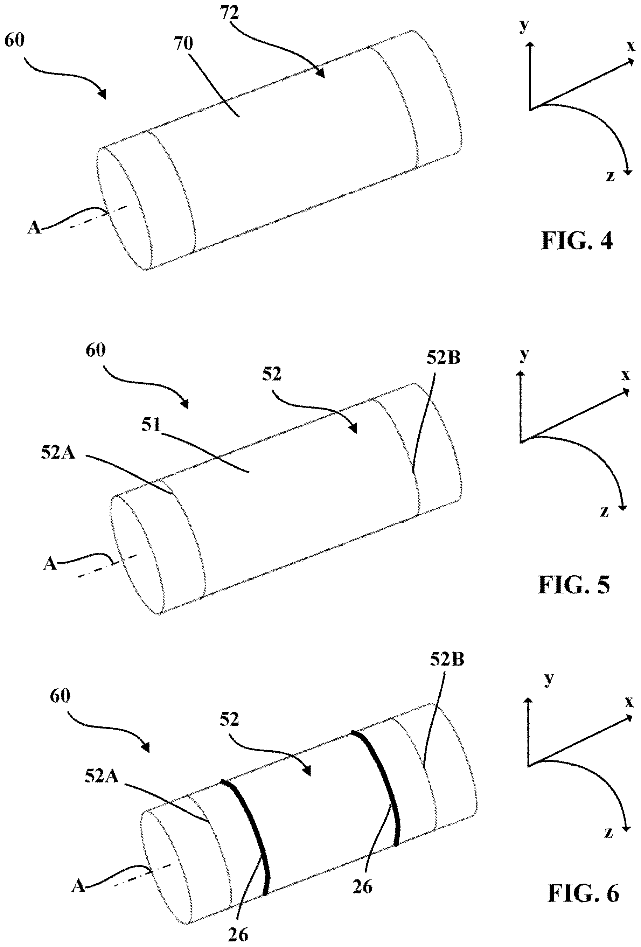

Le pneumatique 10 est obtenu par un procédé selon un premier mode de réalisation de l'invention que l'on va décrire en référence aux figures 4 à 12.

Tout d'abord, on fabrique un ensemble de sommet enroulé 50 et un ensemble de carcasse enroulé 52 en agençant parallèlement les uns aux autres les éléments de renfort filaires 180 et 340 de chaque ensemble 50 et 52 et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments de renfort filaires sont parallèles les uns aux autres et sont parallèles à la direction principale de la nappe. Puis, si cela est nécessaire, on découpe des portions de chaque nappe droite selon un angle de découpe et on aboute ces portions les unes aux autres de façon à obtenir une nappe dite à angle, dans laquelle les éléments de renfort filaires de la nappe sont parallèles les uns aux autres et forment un angle avec la direction principale de la nappe égal à l'angle de découpe. En l'espèce, dans le premier mode de réalisation, on ne forme une nappe à angle que pour la nappe de sommet, la nappe de carcasse ne nécessitant avantageusement pas de découpe dans ce premier mode de réalisation.

Dans le mode de réalisation décrit, on obtient d'une part une unique nappe de sommet 49 et une unique nappe de carcasse 51 dont la largeur axiale de chacune, c'est-à-dire la dimension selon une direction perpendiculaire aux bords longitudinaux de chaque nappe, est égale à la largeur axiale respectivement de chaque ensemble de sommet enroulé 50 et de carcasse enroulé 52 qui seront formés ultérieurement.

En référence à la figure 4, dans une première étape d'assemblage d'une ébauche crue, on forme par enroulement d'une nappe d'étanchéité 70 autour d'un support 60 présentant une forme sensiblement cylindrique autour de son axe principal A, un ensemble d'étanchéité enroulé 72 destiné à former la couche d'étanchéité 15.

Puis, en référence à la figure 5, radialement à l'extérieur de l'ensemble d'étanchéité enroulé 72, on forme par enroulement de la nappe de carcasse 51 autour du support 60, l'ensemble de carcasse enroulé 52 destiné à former la couche de carcasse 34. L'ensemble de carcasse enroulé 52 est délimité axialement par deux bords axiaux 52A, 52B de l'ensemble de carcasse enroulé 52 et comprend les éléments de renfort filaires de carcasse 340 s'étendant sensiblement parallèlement les uns aux autres axialement du bord axial 52A à l'autre bord axial 52B de l'ensemble de carcasse enroulé 52. Chaque élément de renfort filaire de carcasse 340 s'étend, dans la nappe de carcasse 51, selon une direction principale K3 de chaque élément de renfort filaire de carcasse 340 dans la nappe de carcasse 51. La direction principale K3 forme, avec la direction circonférentielle z du support 60, un angle initial A3 de chaque élément de renfort filaire de carcasse 340, en valeur absolue, allant de 80° à 90°. Ici, A3=90°.

En référence aux figures 6 à 8, ensuite, on agence les deux éléments de renfort circonférentiels 26 autour de l'ensemble de carcasse enroulé 52 et on retourne axialement vers l'intérieur chaque bord axial 52A, 52B de l'ensemble de carcasse enroulé 52 de façon à recouvrir radialement chaque élément de renfort circonférentiel 26 par chaque bord axial 52A, 52B de l'ensemble de carcasse enroulé 52 et à ce que l'ensemble de carcasse enroulé 52 soit enroulé autour de chaque élément de renfort circonférentiel 26.

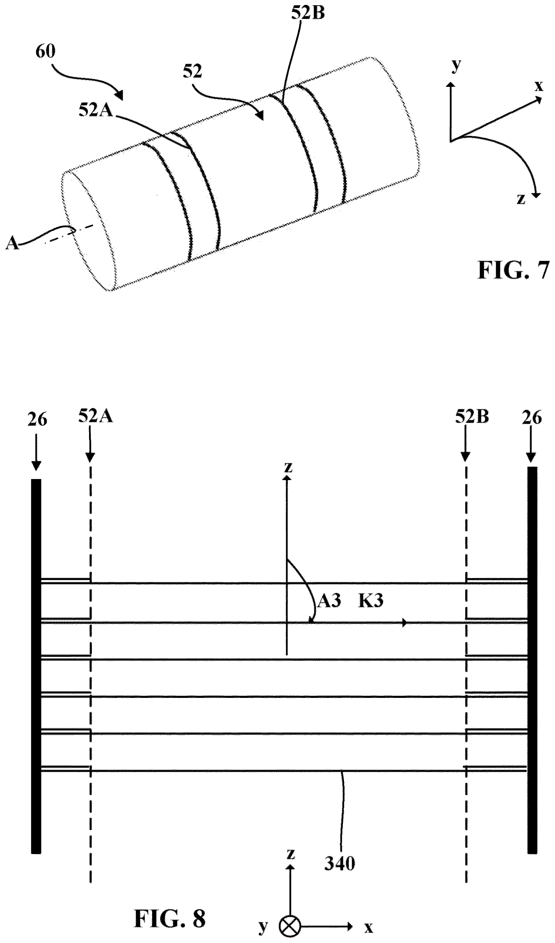

On a représenté sur la figure 8 un schéma illustrant l'agencement des éléments de renfort filaires 340 de carcasse à l'issue de l'étape de retournement axial des bords axiaux 52A, 52B de l'ensemble de carcasse enroulé 52 autour des éléments de renfort circonférentiel 26.

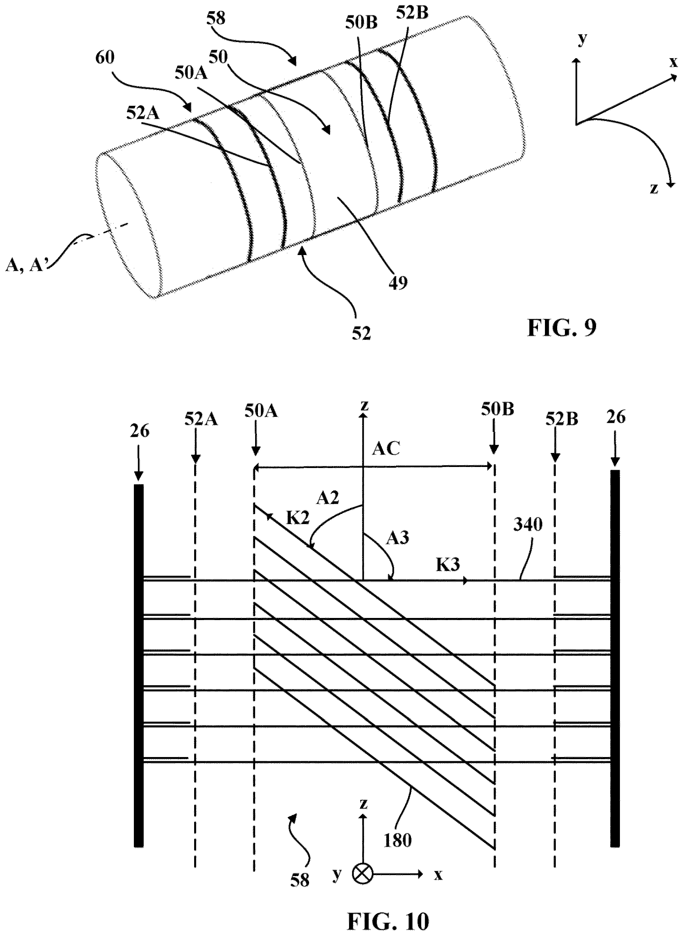

Puis, en référence aux figures 9 et 10, on forme par enroulement de la nappe de sommet 49, radialement à l'extérieur de l'ensemble de carcasse enroulé 52, l'ensemble de sommet enroulé 50 destiné à former la couche de sommet 18. L'ensemble de sommet enroulé 50 est délimité axialement par deux bords axiaux 50A, 50B de l'ensemble de sommet enroulé 50 et comprend les éléments de renfort filaires de sommet 180 s'étendant sensiblement parallèlement les uns aux autres axialement du bord axial 50A à l'autre bord axial 50B de l'ensemble de sommet enroulé 50. Chaque élément de renfort filaire de sommet 180 s'étend, dans la nappe de sommet 49, selon une direction principale K2 de chaque élément de renfort filaire de sommet 180 dans la nappe de sommet 49. En référence à la figure 10, la direction principale K2 forme, avec la direction circonférentielle z du support 60, un angle initial A2 de chaque élément de renfort filaire de sommet 180, en valeur absolue, supérieur ou égal à 20°, et de préférence va de 25° à 50°. Ici, A2=25°.

L'ensemble d'étanchéité enroulé 72, l'ensemble de carcasse enroulé 52 et l'ensemble de sommet enroulé 50 forment alors un assemblage 58 de forme sensiblement cylindrique autour d'un axe principal A' de l'assemblage sensiblement confondu avec l'axe principal A du support 60.

On a représenté sur la figure 10 un schéma analogue à celui de la figure 8 illustrant l'agencement des éléments de renfort filaires 340 de carcasse et des éléments de renfort filaires 180 de sommet à l'issue de l'étape de formation de l'ensemble de sommet enroulé 50. Sur cette figure 10, on a représenté les angles initiaux A2 et A3.

Dans une portion AC de l'assemblage 58 comprise axialement entre les bords axiaux 50A, 50B de l'ensemble de sommet enroulé 50, les angles initiaux A2 et A3 sont différents en valeurs absolues et d'orientations opposées. En l'espèce, A2=-25° et A3=+90°. En outre, on notera que la somme des valeurs absolues de l'angle initial A2 et de l'angle initial A3 est strictement supérieure à 90°, de préférence va de 95° à 120° et plus préférentiellement de 100° à 115°. Ici, |A2|+|A3|=115°.

Puis, on forme par enroulement d'une nappe de roulement ou de plusieurs nappes de roulement, radialement à l'extérieur de l'ensemble de sommet enroulé, un ensemble de roulement enroulé destiné à former la bande de roulement 20. On obtient alors une ébauche crue 11 du pneumatique destinée à être réticulée dans le moule de réticulation.

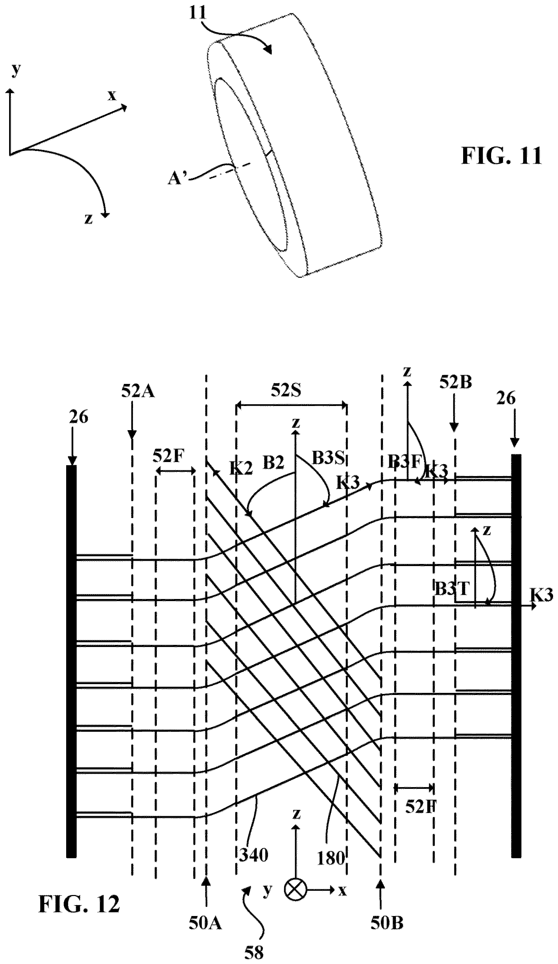

Ensuite, on transfert l'ébauche crue 11 comprenant l'assemblage 58 et formée à partir de cet assemblage 58 depuis le support 60 jusque dans un moule de réticulation comprenant une cavité interne (non représenté). Une fois dans le moule de réticulation, on déforme l'ébauche crue 11 et donc également l'assemblage 58 de forme sensiblement cylindrique de façon à obtenir l'ébauche crue 11 de forme sensiblement torique et donc l'assemblage 58 également de forme sensiblement torique autour de l'axe principal A' de l'assemblage 58. L'étape de déformation de l'ébauche 11 et donc de l'assemblage 58 est donc réalisée lors d'une étape de moulage dans le moule de réticulation, par exemple par la mise sous pression d'une membrane à l'intérieur de l'ébauche crue 11. On obtient l'ébauche déformée 11 illustrée sur les figures 11 et 12.

En référence à la figure 12, on déforme l'assemblage 58 de forme sensiblement cylindrique autour de l'axe principal A' de l'assemblage 58 de façon à obtenir l'assemblage 58 de forme sensiblement torique autour de cet axe principal A' de sorte que, postérieurement à l'étape de déformation, la direction principale K3 de chaque élément de renfort filaire de carcasse 340 forme, avec la direction circonférentielle z de l'assemblage 58, un angle final B3S de chaque élément de renfort filaire de carcasse 340, en valeur absolue, allant de 20° à 65°, dans une portion 52S de l'ensemble de carcasse enroulé 52 s'étendant axialement à l'aplomb radial de l'ensemble de sommet enroulé 50. Ici, B3S=40°. La portion 52S de l'ensemble de carcasse enroulé 52 est destinée à former la portion 34S de la couche de carcasse 34.

On déforme l'assemblage 58 de forme sensiblement cylindrique autour de l'axe principal A' de l'assemblage 58 de façon à obtenir l'assemblage 58 de forme sensiblement torique autour de cet axe principal A' également de sorte que, postérieurement à l'étape de déformation, la direction principale K3 de chaque élément de renfort filaire de carcasse 340 forme, avec la direction circonférentielle z de l'assemblage 58, un angle final B3F de chaque élément de renfort filaire de carcasse 340 allant, en valeur absolue, de 80° à 90°, dans une portion 52F de l'ensemble de carcasse enroulé 52 destinée à former la portion 34F de la portion axialement intérieure 34I de la couche de carcasse 34.

Lors de l'étape de déformation, l'angle final B3T formé par la direction principale K3 de chaque élément de renfort filaire de carcasse 340, avec la direction circonférentielle z de l'assemblage 58, dans une portion de l'ensemble de carcasse enroulé 52 destinée à former la portion axialement extérieure 34E ainsi que dans une portion de l'ensemble de carcasse enroulé 52 destinée à former la portion 34IT de la portion axialement intérieure 34I en regard axial de la portion axialement extérieure 34E est sensiblement identique à l'angle initial A3 avant l'étape de déformation. Ici B3T=90°.

On déforme l'assemblage 58 de forme sensiblement cylindrique autour de l'axe principal A' de l'assemblage 58 de façon à obtenir l'assemblage 58 de forme sensiblement torique autour de cet axe principal A' également de sorte que, postérieurement à l'étape de déformation, la direction principale K2 de chaque élément de renfort filaire de sommet 180 forme, avec la direction circonférentielle z de l'assemblage 58, un angle final B2 de chaque élément de renfort filaire de sommet 180, en valeur absolue, allant de 10° à 25°. Ici B2=15°.

Comme représenté sur la figure 12, les angles B2 et B3S sont différents en valeur absolue et d'orientations opposées. En l'espèce, AT=B2=-15° et ACS=B3S=+40°.

Un autre aspect du procédé est la variation de la densité d'éléments de renfort filaire.

En effet, l'ensemble de sommet enroulé 50 présente une densité initiale d2i d'éléments de renfort filaires de sommet 180 au début de l'étape de déformation et une densité finale d2f d'éléments de renfort filaires de sommet 180 à la fin de l'étape de déformation. De façon analogue, l'ensemble de carcasse enroulé 52 présente une densité initiale d3i d'éléments de renfort filaires de carcasse 340 au début de l'étape de déformation et une densité finale d3f d'éléments de renfort filaires de carcasse 340 à la fin de l'étape de déformation. Ici, d2i=116 fils par décimètre et d3i=90 fils par décimètre. Chaque densité finale d2f, d3f est sensiblement égale respectivement à la densité d2, d3 du pneumatique 10 décrit ci-dessus. Le rapport entre chaque densité finale d2f, d3f et chaque densité initiale d2i, d3i est inférieure ou égale à 1,30, de préférence inférieure ou égale à 1,25 et ici égal à 1,20.

L'étape de déformation est réalisée de sorte que chaque densité finale d2f, d3f est strictement supérieure à chaque densité initiale d2i, d3i et également de sorte que la densité d'éléments de renfort filaires de sommet 180 diminue depuis la densité initiale d2i pour atteindre une densité minimale d2min d'éléments de renfort filaires de sommet 180 strictement inférieure à la densité initiale d2i. Ici, d2min=104 fils par décimètre. Puis, la densité d'éléments de renfort filaires de sommet 180 augmente depuis la densité minimale d2min pour atteindre la densité finale d2f.

On va maintenant décrire un pneumatique et un procédé conforme à un deuxième mode de réalisation selon l'invention. Les éléments analogues à ceux du premier mode de réalisation sont désignés par des références identiques.

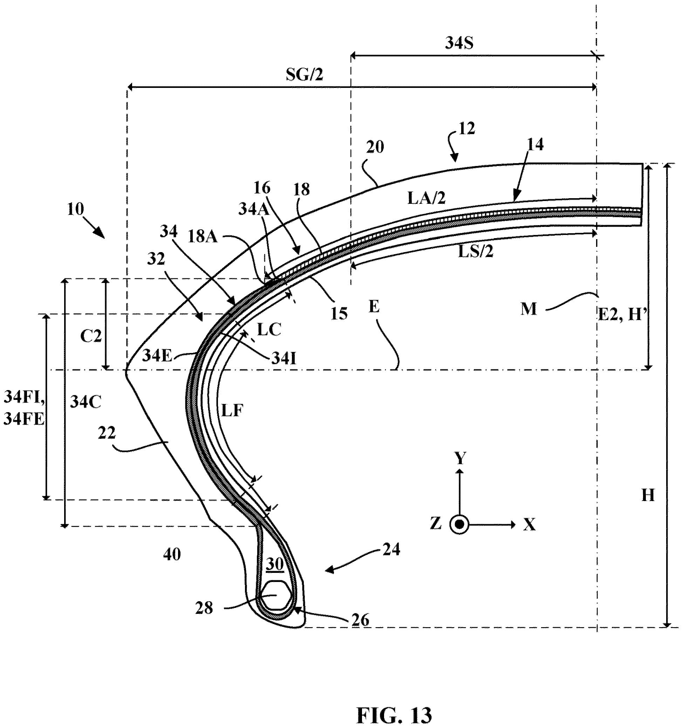

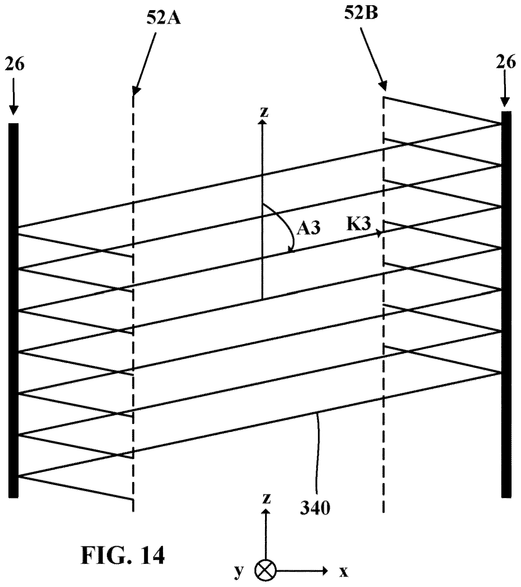

A la différence du pneumatique 10 selon le premier mode de réalisation et comme illustré sur la figure 13, le bord axial 34A de la couche de carcasse 34 est situé radialement à l'extérieur de l'équateur E du pneumatique 10 et de préférence situé radialement à l'extérieur de l'équateur E du pneumatique 10 à une distance radiale C2 de l'équateur E inférieure ou égale à 50% de la distance radiale E2 entre l'équateur E et le point le plus radialement extérieur du pneumatique 10. Plus préférentiellement et comme cela est représenté sur la figure 14, le bord axial 34A est intercalé radialement entre la portion axialement intérieure 34I de la couche de carcasse 34 et la couche de sommet 18. En l'espèce, E2=35 mm et C2=10 mm.

A la différence du pneumatique 10 selon le premier mode de réalisation, l'angle AT est égal à -21° et l'angle ACS est égal à +37°.

A la différence du pneumatique 10 selon le premier mode de réalisation, la direction principale D3 de chaque élément de renfort filaire de carcasse 340, forme, avec la direction circonférentielle Z du pneumatique 10, dans au moins une portion 34FI et 34FE de chaque portion axialement intérieure 34I et axialement extérieure 34E de la couche de carcasse 34 s'étendant radialement dans chaque flanc 22, un angle ACF, en valeur absolue, allant de 50° à 90°. En l'espèce, l'angle ACF est variable dans chaque portion 34FI et 34FE et varie entre 50° et 73°.

Chaque portion 34FI et 34FE de chaque portion axialement intérieure 34I et axialement extérieure 34E de la couche de carcasse 34 présente une hauteur curviligne LF selon la direction radiale égale à au moins 50%, de préférence au moins 60% et plus préférentiellement au moins 70% et à au plus 100%, de préférence au plus 90% et plus préférentiellement au plus 80% de la hauteur curviligne LC selon la direction radiale de la portion 34C de la portion axialement externe 34E de la couche de carcasse 34 au contact de la portion axialement interne 34I de la couche de carcasse 34. Ici, LF/LC=100% même si cela n'est pas représenté correctement sur la figure 13 dont le but principal est de permettre d'illustrer la détermination des hauteurs LF et LC qui, sur la figure 13 devraient être égales.

En outre, contrairement au premier mode de réalisation dans lequel tous les éléments de renfort filaires de sommet 180 et de carcasse 340 sont identiques, les éléments de renfort filaires de sommet 180 sont différents des éléments de renfort filaires de carcasse 340. Chaque élément de renfort filaire de la couche de sommet 180 comprend un assemblage de plusieurs monofilaments élémentaires textiles choisis parmi les monofilaments élémentaires de polyamide aromatique et les assemblages de ces monofilaments élémentaires de polyamide aromatique avec des monofilaments élémentaires textiles différents des monofilaments élémentaires textiles de polyamide aromatique. En l'espèce, chaque élément de renfort filaire de sommet 180 est un assemblage de deux brins de polyamide aromatique, par exemple de l'aramide, présentant chacun un titre égal à 167 tex et retordus individuellement à 290 tours/mètre dans un sens puis collectivement à 290 tours/mètre dans l'autre sens.

On va maintenant décrire le procédé selon le deuxième mode de réalisation en insistant sur les différences par rapport au premier mode de réalisation.

Les deux nappes de sommet 49 et de carcasse 51 sont toutes les deux des nappes à angles.

En référence à la figure 14, on forme par enroulement de la nappe de carcasse 51 autour du support 60, l'ensemble de carcasse enroulé 52. La direction principale K3 forme, avec la direction circonférentielle z du support 60, un angle initial A3 de chaque élément de renfort filaire de carcasse 340, en valeur absolue, supérieur ou égal à 50° et de préférence allant de 50° à 80°. Ici, A3=+75°.

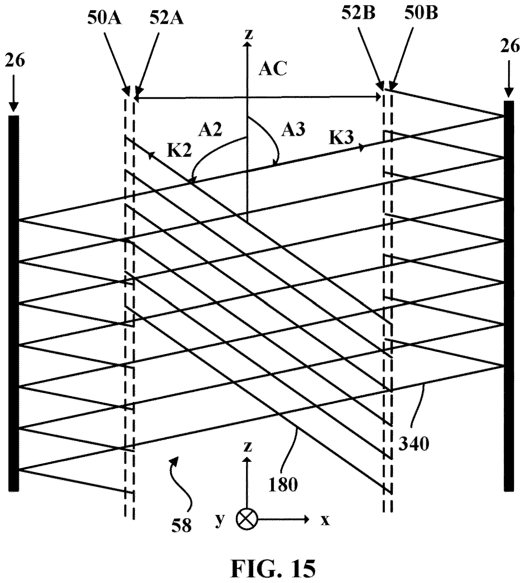

En référence à la figure 15, on forme par enroulement de la nappe de sommet 49, radialement à l'extérieur de l'ensemble de carcasse enroulé 52, l'ensemble de sommet enroulé 50. La direction principale K2 forme, avec la direction circonférentielle z du support 60, un angle initial A2 de chaque élément de renfort filaire de sommet 180, en valeur absolue, supérieur ou égal à 20°, et de préférence allant de 25° à 50°. Ici, A2=-35°.

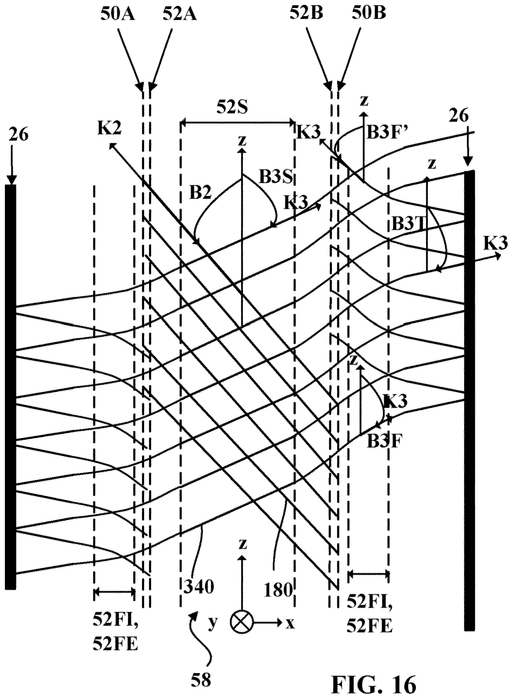

En référence à la figure 16, on déforme l'assemblage 58 de forme sensiblement cylindrique autour de l'axe principal A' de l'assemblage 58 de façon à obtenir l'assemblage 58 de forme sensiblement torique autour de cet axe principal A' de sorte que, postérieurement à l'étape de déformation, la direction principale K3 de chaque élément de renfort filaire de carcasse 340 forme, avec la direction circonférentielle z de l'assemblage 58 :
- un angle final B3S égal à +37° dans la portion 52S,
- un angle final B3F, en valeur absolue, allant de 50° à 90°, dans une portion 52FI de l'ensemble de carcasse enroulé 52 destinée à former la portion 34FI de la portion axialement intérieure 34I de la couche de carcasse 34 destinée à s'étendre radialement dans chaque flanc 22,
- un angle final B3F', en valeur absolue, allant de 50° à 90°, dans une portion 52FE de l'ensemble de carcasse enroulé 52 destinée à former la portion 34FE de la portion axialement extérieure 34E de la couche de carcasse 34 destinée à s'étendre radialement dans chaque flanc 22.

De façon analogue au premier mode de réalisation, lors de l'étape de déformation, l'angle final B3T formé par la direction principale K3 de chaque élément de renfort filaire de carcasse 340, avec la direction circonférentielle z de l'assemblage 58, dans des portions de l'ensemble de carcasse enroulé 52 destinée à former des portions radialement à l'intérieur de chaque portions 34FI et 34FE de la couche de carcasse est sensiblement identique à l'angle initial A3 avant l'étape de déformation. Ici B3T=75°.

On déforme l'assemblage 58 de forme sensiblement cylindrique autour de l'axe principal A' de l'assemblage 58 de façon à obtenir l'assemblage 58 de forme sensiblement torique autour de cet axe principal A' également de sorte que, postérieurement à l'étape de déformation, la direction principale K2 de chaque élément de renfort filaire de sommet 180 forme, avec la direction circonférentielle z de l'assemblage 58, un angle final B2 égal à -21°.

### TESTS COMPARATIFS

### Conservation de la dimension radiale attendue

On a testé la tenue de la dimension radiale des pneumatiques 10 selon les premier et deuxième modes de réalisation décrits ci-dessus ainsi que celle d'un pneumatique de type bias décrit précédemment lorsqu'ils sont soumis à une vitesse de test égale à 220 km/h et gonflée sous une pression nominale. On mesure l'écart entre le diamètre mesuré à vitesse nulle et le diamètre mesuré à la vitesse de test. On a rassemblé les résultats dans le tableau 1 ci-dessous.

**Tableau 1**

| Pneumatique | Ecart (mm) |
|---|---|
| Invention (10) | 5 |
| Type Bias | 10 |

Ces résultats démontrent ce qui a été expliqué précédemment à savoir le meilleur maintien de la dimension radiale du pneumatique lorsqu'il est soumis à une force centrifuge, qu'elle soit d'origine dynamique, ici la vitesse, ou bien qu'elle soit d'origine statique, comme lors de l'application de la pression de gonflage

On a également testé la tenue de la dimension radiale des pneumatiques 10 selon les premier et deuxième modes de réalisation décrits ci-dessus ainsi que celle d'un pneumatique de type bias décrit précédemment lorsqu'ils sont soumis à une pression de gonflage nominale. On mesure l'écart entre le diamètre mesuré en l'absence de pression et le diamètre mesuré sous une pression nominale. On a rassemblé les résultats dans le tableau 2 ci-dessous.

**Tableau 2**

| Pneumatique | Ecart (mm) |
|---|---|
| Invention (10) | < 1 mm |
| Type Bias | 3 mm |

### Energie à rupture

On a testé la performance au test d'énergie à rupture de pneumatiques A, B et C analogues au pneumatique 10 selon le premier mode de réalisation et dans lesquels on a fait varier la résistance à la rupture des couches de sommet et de carcasse (Tableau 3) ainsi que celle de pneumatiques de type bias A', B', C' présentant les angles AB1, et AB2 décrits précédemment et dans lesquels on a également fait varier la résistance à la rupture des couches de carcasse (Tableau 4). Le test est mené conformément aux recommandations de la NHTSA (« National Highway Traffic Safety Administration ») indiquées dans le document intitulé « Evaluation of Laboratory Tire Tread and Sidewall Strength (Plunger Energy) Test Method ». Dans les tableaux 3 et 4, on a indiqué l'énergie à rupture (BE) exprimée en Joules (J). Bien évidemment, plus la valeur est élevée, meilleur est la performance du pneumatique au test d'énergie à rupture.

**Tableau 3**

| | Rs (daN/mm) | Rc (daN/mm) | BE (J) |
|---|---|---|---|
| Pneumatique A | 1920 | 1920 | 37 |
| Pneumatique B | 2475 | 1920 | 45-50 |
| Pneumatique C | 2624 | 1920 | 45-50 |

**Tableau 4**

| | Rs (daN/mm) | Rc (daN/mm) | BE (J) |
|---|---|---|---|
| Pneumatique A' | 1920 | 1920 | 33 |
| Pneumatique B' | 2475 | 1920 | 33 |
| Pneumatique C' | 2624 | 1920 | <40 |

Ces résultats montrent, d'une part, que la réduction de l'écart angulaire entre les directions principales des éléments de renfort filaires de sommet et de carcasse permet d'obtenir une amélioration significative de l'énergie à rupture et, d'autre part, qu'en augmentant la résistance à la rupture de la couche de sommet, on améliore significativement l'énergie à la rupture et ce davantage dans le cas d'un pneumatique conforme à l'invention que dans le cas d'un pneumatique de type bias.

### Rigidité de dérive

On a également testé la performance en rigidité de dérive de différents pneumatiques E, G et H conformes à l'invention et F et I non conformes à l'invention. Le test en rigidité de dérive est réalisé en faisant rouler le pneumatique testé sur une machine de roulage et en appliquant une charge donnée (ici successivement 100 daN, 150 daN et 200 daN) sous une pression de 2,5 bars. Lors du roulage, on soumet le pneumatique testé à la charge donné et on fait tourner le pneumatique de +0,5° autour de l'axe radial perpendiculaire à la surface de contact entre le pneumatique et le sol, puis de +1° autour de cet axe. Puis, on réitère la mesure pour des angles de -0,5° et -1° autour de cet axe. On détermine alors l'effort généré par le pneumatique par le support de roulage. On en déduit alors la rigidité de dérive qui est, pour une charge donnée, exprimée en daN/°. Plus la rigidité de dérive est élevée, plus le pneumatique est capable de répondre à l'effort qu'on lui impose et meilleur est son comportement routier. Les pneumatiques E, F sont tels que le bord axial 34A de la couche de carcasse 34 est intercalé radialement entre la portion axialement intérieure 34I de la couche de carcasse 34 et la couche de sommet 18 (comme dans le deuxième mode de réalisation). Le pneumatique G est tel que le bord axial 34A de la couche de carcasse 34 est au niveau de l'équateur E. Les pneumatiques H et I sont tels que le bord axial 34A de la couche de carcasse 34 est situé radialement à l'intérieur de l'équateur E (comme dans le premier mode de réalisation). On a rassemblé les autres caractéristiques AT, ACF et ACS ainsi que les résultats au test de rigidité de dérive dans le tableau 5 ci-dessous.

**Tableau 5**

| | AT (°) | ACF (°) | ACS (°) | Dz (100 daN) | Dz (150 daN) | Dz (200 daN) |
|---|---|---|---|---|---|---|
| E | -21 | +70-73 | +37 | 18.8 daN/° | 20.5 daN/° | 19.5 daN/° |
| F | -29 | +90 | +57 | 15.2 daN/° | 15.8 daN/° | 15.0 daN/° |
| G | -21 | +70-73 | +37 | 13.7 daN/° | 14.2 daN/° | 14.0 daN/° |
| H | -21 | +90 | +37 | 14.7 daN/° | 13.8 daN/° | 13.0 daN/° |
| I | -29 | +90 | +57 | 14.9 daN/° | 13.9 daN/° | 13.0 daN/° |

Ces résultats montrent que le pneumatique E, et dans une bien moindre mesure, le pneumatique F dans lesquels la portion axialement extérieure 34E remonte radialement au-dessus de l'équateur E présentent une rigidité de dérive largement améliorée par rapport aux pneumatiques G, H et I dans lesquels la portion axialement extérieure remonte au plus au niveau de l'équateur. Cette amélioration est maximale dans le cas du pneumatique E conforme à l'invention dans lequel, en bloquant l'angle B3 lors de l'étape de conformation grâce à la portion axialement extérieure 34E remontant radialement au-dessus de l'équateur E et en l'empêchant d'atteindre une valeur trop importante (l'angle ACF du pneumatique E est significativement inférieur à l'intervalle 80°-90° dans lequel se trouve l'angle ACF du pneumatique F), on obtient une rigidité de dérive significativement améliorée.

L'invention ne se limite pas aux modes de réalisation décrits précédemment.

En effet, on pourra notamment mettre en oeuvre l'invention dans des modes de réalisation dans lesquels les conditions II et EII sont satisfaites.

## Revendications

1. Pneumatique (10) pour motocyclette comprenant un sommet (12), deux flancs (22), deux bourrelets (24), chaque flanc (22) reliant chaque bourrelet (24) au sommet (12), le pneumatique (10) comprenant une armature de carcasse (32) ancrée dans chaque bourrelet (24) et s'étendant dans chaque flanc (22) et radialement intérieurement au sommet (12), l'armature de carcasse (32) comprenant une unique couche de carcasse (34), le sommet (12) comprenant :
- une bande de roulement (20) destinée à venir en contact avec un sol lors du roulage du pneumatique (10),
- une armature de sommet (14) agencée radialement entre la bande de roulement (20) et l'armature de carcasse (32), l'armature de sommet (14) comprenant une unique couche de sommet (18),
la couche de sommet (18) est délimitée axialement par deux bords axiaux (18A, 18B) de la couche de sommet (18) et comprend des éléments de renfort filaires de sommet (180) s'étendant axialement d'un bord axial (18A, 18B) à l'autre bord axial (18A, 18B) de la couche de sommet (18) les uns sensiblement parallèlement aux autres selon une direction principale (D2) de chaque élément de renfort filaire de sommet (180) formant, avec la direction circonférentielle (Z) du pneumatique (10), un angle AT,
la couche de carcasse (34) est délimitée axialement par deux bords axiaux (34A, 34B) de la couche de carcasse (34) et comprend des éléments de renfort filaires de carcasse (340) s'étendant axialement d'un bord axial (34A, 34B) à l'autre bord axial (34A, 34B) de la couche de carcasse (34), chaque élément de renfort filaire de carcasse (340) s'étendant selon une direction principale (D3) de chaque élément de renfort filaire de carcasse (340), formant, avec la direction circonférentielle (Z) du pneumatique (10), un angle ACS, dans une portion (34S) de la couche de carcasse (34) s'étendant axialement à l'aplomb radial de la couche de sommet (18),
l'angle AT et l'angle ACS étant d'orientations opposées,
**caractérisé en ce que** l'angle AT et l'angle ACS sont différents en valeur absolue et **en ce que** l'une ou l'autre des conditions I ou Il est satisfaite :
I - l'angle AT va, en valeur absolue, de 10° à 25° et l'angle ACS va, en valeur absolue, de 20° à 65° dans la portion (34S) de la couche de carcasse (34) s'étendant axialement à l'aplomb radial de la couche de sommet (18),
II - l'angle AT va, en valeur absolue, de 20° à 65° et l'angle ACS va, en valeur absolue, de 10° à 25° dans la portion (34S) de la couche de carcasse (34) s'étendant axialement à l'aplomb radial de la couche de sommet (18).

2. Pneumatique (10) selon la revendication précédente, dans lequel :
- dans le cas où la condition I est satisfaite, l'angle ACS va, en valeur absolue, de 20° à 60° dans la portion (34S) de la couche de carcasse (34) s'étendant axialement à l'aplomb radial de la couche de sommet (18),
- dans le cas où la condition Il est satisfaite, l'angle AT va, en valeur absolue, de 20° à 60°.

3. Pneumatique (10) selon l'une quelconque des revendications précédentes, dans lequel la somme des valeurs absolues de l'angle AT et de l'angle ACS est strictement inférieure ou égale à 70°, de préférence inférieure ou égal à 60°, et plus préférentiellement allant de 40° à 60°.

4. Pneumatique (10) selon l'une quelconque des revendications précédentes, dans lequel le rapport de la résistance à la rupture de la couche de sommet sur la résistance à la rupture de la couche de carcasse est strictement supérieur à 1, de préférence va de 1,10 à 1,45 et plus préférentiellement de 1,25 à 1,35.

5. Pneumatique (10) selon l'une quelconque des revendications précédentes, dans lequel chaque bourrelet (24) comprend un élément de renfort circonférentiel (26) et dans lequel la couche de carcasse (34) comprend:
- une portion axialement intérieure (34I) s'étendant depuis le plan médian (M) du pneumatique (10) en passant par un des flancs (22) jusque dans le bourrelet (24) radialement intérieurement à l'élément de renfort circonférentiel (26), et
- une portion axialement extérieure (34E) agencée axialement à l'extérieur de la portion axialement intérieure (34I) et s'étendant depuis le bourrelet (24) radialement intérieurement à l'élément de renfort circonférentiel (26) jusqu'à un des bords axiaux (34A, 34B) de la couche de carcasse (34),
les portions axialement intérieure (34I) et axialement extérieure (34E) étant agencées de façon à ce que la couche de carcasse (34) soit enroulée autour de l'élément de renfort circonférentiel (26).

6. Pneumatique (10) selon la revendication 5, dans lequel le bord axial (34A, 34B) de la couche de carcasse (34) est situé radialement à l'intérieur de l'équateur (E) du pneumatique (10) et, de préférence, situé radialement à l'intérieur de l'équateur (E) du pneumatique (10) à une distance radiale (C1) de l'équateur (E) supérieure ou égale à 50% de la distance radiale (E1) entre l'équateur (E) et le point le plus radialement intérieur du pneumatique (10).

7. Pneumatique (10) selon la revendication précédente, dans lequel la direction principale (D3) de chaque élément de renfort filaire de carcasse (340), forme, avec la direction circonférentielle (Z) du pneumatique (10), dans au moins une portion (34F) de la portion axialement intérieure de la couche de carcasse (34) s'étendant radialement dans chaque flanc (22), un angle ACF, allant, en valeur absolue, de 80° à 90°.

8. Pneumatique (10) selon la revendication 5, dans lequel le bord axial de la couche de carcasse (34) est situé radialement à l'extérieur de l'équateur (E) du pneumatique (10) et de préférence situé radialement à l'extérieur de l'équateur (E) du pneumatique (10) à une distance radiale (C2) de l'équateur (E) inférieure ou égale à 50% de la distance radiale (E2) entre l'équateur (E) et le point le plus radialement extérieur du pneumatique (10) et plus préférentiellement est intercalé radialement entre la portion axialement intérieure (34I) de la couche de carcasse (34) et la couche de sommet (18) ou agencé radialement à l'extérieur de la couche de sommet (18).

9. Pneumatique (10) selon la revendication précédente, dans lequel la direction principale (D3) de chaque élément de renfort filaire de carcasse (340), forme, avec la direction circonférentielle (Z) du pneumatique (10), dans au moins une portion (34F) de chaque portion axialement intérieure et axialement extérieure de la couche de carcasse (34) s'étendant radialement dans chaque flanc (22), un angle ACF, en valeur absolue allant de 50° à 90°.

10. Procédé de fabrication d'un pneumatique (10) selon l'une quelconque des revendications précédentes, dans lequel:
- on forme par enroulement d'une nappe de carcasse (51) ou de plusieurs nappes de carcasse (51) autour d'un support (60) présentant une forme sensiblement cylindrique autour d'un axe principal (A'), un ensemble de carcasse enroulé (52) délimité axialement par deux bords axiaux (52A, 52B) de l'ensemble de carcasse enroulé (52) et comprenant les éléments de renfort filaires de carcasse (340) s'étendant sensiblement parallèlement les uns aux autres axialement d'un bord axial (52A, 52B) à l'autre bord axial (52A, 52B) de l'ensemble de carcasse enroulé (50), chaque élément de renfort filaire de carcasse (340) s'étendant, dans la ou chaque nappe de carcasse (51), selon une direction principale (K3) de chaque élément de renfort filaire de carcasse (340) dans la ou chaque nappe de carcasse (51) formant, avec la direction circonférentielle (z) du support (60), un angle initial A3 de chaque élément de renfort filaire de carcasse (340), l'ensemble de carcasse enroulé (52) étant destiné à former l'unique couche de carcasse (34),
- on forme par enroulement d'une nappe de sommet (49) ou de plusieurs nappes de sommet (50), radialement à l'extérieur de l'ensemble de carcasse enroulé (52), un ensemble de sommet enroulé (50) délimité axialement par deux bords axiaux (50A, 50B) de l'ensemble de sommet enroulé (50) et comprenant les éléments de renfort filaires de sommet (180) s'étendant sensiblement parallèlement les uns aux autres axialement d'un bord axial (50A, 50B) à l'autre bord axial (50A, 50B) de l'ensemble de sommet enroulé (50), chaque élément de renfort filaire de sommet (180) s'étendant, dans la ou chaque nappe de sommet (49), selon une direction principale (K2) de chaque élément de renfort filaire de sommet (180) dans la ou chaque nappe de sommet (49) formant, avec la direction circonférentielle (z) du support (60), un angle initial A2 de chaque élément de renfort filaire de sommet (180), l'ensemble de sommet enroulé (50) étant destiné à former l'unique couche de sommet (18),
l'ensemble de carcasse enroulé (52) et l'ensemble de sommet enroulé (50) formant un assemblage (58) de forme sensiblement cylindrique autour d'un axe principal (A') de l'assemblage (58) sensiblement confondu avec l'axe principal (A) du support (60),
procédé dans lequel on déforme l'assemblage (58) de forme sensiblement cylindrique autour de l'axe principal (A') de l'assemblage (58) de façon à obtenir un assemblage (58) de forme sensiblement torique autour de l'axe principal (A') de l'assemblage (58) de sorte que, postérieurement à l'étape de déformation :
- la direction principale (K2) de chaque élément de renfort filaire de sommet (180) forme, avec la direction circonférentielle (z) de l'assemblage (58), un angle final B2 de chaque élément de renfort filaire de sommet (180),
- la direction principale (K3) de chaque élément de renfort filaire de carcasse (340) forme, avec la direction circonférentielle (z) de l'assemblage (58), un angle final B3S de chaque élément de renfort filaire de carcasse (340), dans une portion (52S) de l'ensemble de carcasse enroulé (52) s'étendant axialement à l'aplomb radial de l'ensemble de sommet enroulé (50),
procédé dans lequel, postérieurement à l'étape de déformation, l'angle B2 et l'angle B3S sont différents en valeurs absolues et d'orientations opposées et de sorte que l'une ou l'autre des conditions El ou EII est satisfaite :
El - l'angle B2 va, en valeur absolue, de 10° à 25° et l'angle B3S va, en valeur absolue, de 20° à 65° dans la portion (52S) de l'ensemble de carcasse enroulé (52) s'étendant axialement à l'aplomb radial de l'ensemble de sommet enroulé (50),
EII - l'angle B2 va, en valeur absolue, de 20° à 65° et l'angle B3S va, en valeur absolue, de 10° à 25° dans la portion (52S) de l'ensemble de carcasse enroulé (52) s'étendant axialement à l'aplomb radial de l'ensemble de sommet enroulé (50).

11. Procédé selon la revendication précédente, dans lequel l'étape de déformation de l'assemblage (58) de forme sensiblement cylindrique de façon à obtenir l'assemblage (58) de forme sensiblement torique est réalisée dans un moule de réticulation de l'assemblage (58).

12. Procédé selon l'une quelconque des revendications 10 ou 11, dans lequel l'ensemble de sommet enroulé (50) présentant une densité initiale (d2i) d'éléments de renfort filaires de sommet (180) au début de l'étape de déformation et une densité finale (d2f) d'éléments de renfort filaires de sommet (180) à la fin de l'étape de déformation, l'étape de déformation est réalisée de sorte que la densité finale (d2f) d'éléments de renfort filaires de sommet (180) est strictement supérieure à la densité initiale (d2i) d'éléments de renfort filaires de sommet (180).

13. Procédé selon la revendication précédente, dans lequel l'étape de déformation est réalisée de sorte sont tels que, lors de l'étape de déformation :
- dans le cas où la condition El est satisfaite, la densité d'éléments de renfort filaires de sommet (180) diminue depuis la densité initiale (d2i) d'éléments de renfort filaires de sommet (180) pour atteindre une densité minimale (d2min) d'éléments de renfort filaires de sommet (180) strictement inférieure à la densité initiale (d2i) d'éléments de renfort filaires de sommet (180), puis la densité d'éléments de renfort filaires de sommet (180) augmente depuis la densité minimale (d2min) d'éléments de renfort filaires de sommet (180) pour atteindre la densité finale (d2f) d'éléments de renfort filaires de sommet (180),
- dans le cas où la condition EII est satisfaite, la densité d'éléments de renfort filaires de carcasse (340) diminue depuis la densité initiale (d3i) d'éléments de renfort filaires carcasse (340) pour atteindre une densité minimale (d3min) d'éléments de renfort filaires de carcasse (340) strictement inférieure à la densité initiale (d3i) d'éléments de renfort filaires de carcasse (340), puis la densité d'éléments de renfort filaires de carcasse (340) augmente depuis la densité minimale (d3min) d'éléments de renfort filaires de carcasse (340) pour atteindre la densité finale (d3f) d'éléments de renfort filaires de carcasse (340).

14. Procédé selon la revendication 12 ou 13, dans lequel :
- dans le cas où la condition El est satisfaite, le rapport entre la densité finale (d2f) d'éléments de renfort filaires de sommet (180) et la densité initiale (d2i) d'éléments de renfort filaires de sommet (180) est inférieure ou égale à 1,30, de préférence inférieure ou égale à 1,25,
- dans le cas où la condition EII est satisfaite, le rapport entre la densité finale (d3f) d'éléments de renfort filaires de carcasse (340) et la densité initiale (d3i) d'éléments de renfort filaires de carcasse (340) est inférieure ou égale à 1,30, de préférence inférieure ou égale à 1,25.

15. Procédé selon l'une quelconque des revendications 10 à 14, dans lequel la somme des valeurs absolues de l'angle initial A2 et de l'angle initial A3 est strictement supérieure à 90°, de préférence va de 95° à 120° et plus préférentiellement de 100° à 115°.

## Patentansprüche

1. Reifen (10) für Motorräder mit einem Scheitel (12), zwei Seitenwänden (22), zwei Wülsten (24), wobei jede Seitenwand (22) jeden Wulst (24) mit dem Scheitel (12) verbindet, wobei der Reifen (10) eine Karkassenbewehrung (32) aufweist, die in jedem Wulst (24) verankert ist und sich in jeder Seitenwand (22) und radial nach innen zum Scheitel (12) erstreckt, wobei die Karkassenbewehrung (32) eine einzelne Karkassenschicht (34) aufweist, wobei der Scheitel (12) Folgendes aufweist:
- eine Lauffläche (20), die dazu bestimmt ist, beim Rollen des Reifens (10) mit einem Boden in Kontakt zu kommen,
- eine Scheitelbewehrung (14), die radial zwischen der Lauffläche (20) und der Karkassenbewehrung (32) angeordnet ist, wobei die Scheitelbewehrung (14) eine einzelne Scheitelschicht (18) aufweist,
wobei die Scheitelschicht (18) axial durch zwei axiale Ränder (18A, 18B) der Scheitelschicht (18) begrenzt ist und drahtförmige Scheitelverstärkungselemente (180) aufweist, die sich axial von einem axialen Rand (18A, 18B) zum anderen axialen Rand (18A, 18B) der Scheitelschicht (18) erstrecken, die einen im Wesentlichen parallel zu den anderen entlang einer Hauptrichtung (D2) jedes drahtförmigen Scheitelverstärkungselements (180), die mit der Umfangsrichtung (Z) des Reifens (10) einen Winkel AT bildet,
wobei die Karkassenschicht (34) axial durch zwei axiale Ränder (34A, 34B) der Karkassenschicht (34) begrenzt ist und drahtförmige Karkassenverstärkungselemente (340) aufweist, die sich axial von einem axialen Rand (34A, 34B) zum anderen axialen Rand (34A, 34B) der Karkassenschicht (34) erstrecken, wobei sich jedes drahtförmige Karkassenverstärkungselement (340) entlang einer Hauptrichtung (D3) jedes drahtförmigen Karkassenverstärkungselements (340) erstreckt, die mit der Umfangsrichtung (Z) des Reifens (10) einen Winkel ACS in einem Abschnitt (34S) der Karkassenschicht (34) bildet, der sich axial im radialen Lot zur Scheitelschicht (18) erstreckt,
wobei der Winkel AT und der Winkel ACS entgegengesetzte Orientierungen haben,
**dadurch gekennzeichnet, dass** der Winkel AT und der Winkel ACS sich im Absolutwert unterscheiden, und dadurch, dass entweder die Bedingung I oder die Bedingung II erfüllt ist:
I - der Absolutwert des Winkels AT reicht von 10° bis 25° und der Absolutwert des Winkels ACS reicht von 20° bis 65° in dem Abschnitt (34S) der Karkassenschicht (34), der sich axial im radialen Lot zur Scheitelschicht (18) erstreckt,
II - der Absolutwert des Winkels AT reicht von 20° bis 65° und der Absolutwert des Winkels ACS reicht von 10° bis 25° in dem Abschnitt (34S) der Karkassenschicht (34), der sich axial im radialen Lot zur Scheitelschicht (18) erstreckt.

2. Reifen (10) nach dem vorhergehenden Anspruch, wobei:
- in dem Fall, dass Bedingung I erfüllt ist, der Absolutwert des Winkels ACS in dem Abschnitt (34S) der Karkassenschicht (34), der sich axial im radialen Lot zur Scheitelschicht (18) erstreckt, von 20° bis 60° reicht,
- in dem Fall, dass Bedingung II erfüllt ist, der Absolutwert des Winkels AT von 20° bis 60° reicht.

3. Reifen (10) nach einem der vorhergehenden Ansprüche, wobei die Summe der absoluten Werte des Winkels AT und des Winkels ACS strikt kleiner oder gleich 70° ist, vorzugsweise kleiner oder gleich 60° und besonders bevorzugt im Bereich von 40° bis 60° liegt.

4. Reifen (10) nach einem der vorhergehenden Ansprüche, wobei das Verhältnis der Reißfestigkeit der Scheitelschicht zur Reißfestigkeit der Karkassenschicht strikt größer als 1 ist, vorzugsweise 1,10 bis 1,45 und besonders bevorzugt 1,25 bis 1,35.

5. Reifen (10) nach einem der vorhergehenden Ansprüche, wobei jeder Wulst (24) ein Umfangsverstärkungselement (26) aufweist und wobei die Karkassenschicht (34) Folgendes aufweist:
- einen axial inneren Abschnitt (341), der sich von der Mittelebene (M) des Reifens (10) durch eine der Seitenwände (22) bis in den Wulst (24) radial innen von dem Umfangsverstärkungselement (26) erstreckt, und
- einen axial äußeren Abschnitt (34E), der axial außerhalb des axial inneren Abschnitts (341) angeordnet ist und sich von der Wulst (24) radialinnen von dem Umfangsverstärkungselement (26) bis zu einem der axialen Ränder (34A, 34B) der Karkassenschicht (34) erstreckt, wobei die axial inneren (341) und axial äußeren (34E) Abschnitte so angeordnet sind, dass die Karkassenschicht (34) um das Umfangsverstärkungselement (26) gewickelt wird.

6. Reifen (10) nach Anspruch 5, wobei der axiale Rand (34A, 34B) der Karkassenschicht (34) radial innerhalb des Äquators (E) des Reifens (10) angeordnet ist und vorzugsweise radial innerhalb des Äquators (E) des Reifens (10) in einem radialen Abstand (C1) von dem Äquator (E) angeordnet ist, der größer oder gleich 50 % des radialen Abstands (E1) zwischen dem Äquator (E) und dem radial innersten Punkt des Reifens (10) ist.

7. Reifen (10) nach dem vorhergehenden Anspruch, wobei die Hauptrichtung (D3) jedes drahtförmigen Karkassenverstärkungselements (340) mit der Umfangsrichtung (Z) des Reifens (10) in mindestens einem Abschnitt (34F) des axial inneren Abschnitts der Karkassenschicht (34), der sich radial in jeder Seitenwand (22) erstreckt, einen Winkel ACF bildet, dessen Absolutwert von 80° bis 90° reicht.

8. Reifen (10) nach Anspruch 5, wobei der axiale Rand der Karkassenschicht (34) radial außerhalb des Äquators (E) des Reifens (10) angeordnet ist und vorzugsweise radial außerhalb des Äquators (E) des Reifens (10) in einem radialen Abstand (C2) von dem Äquator (E) angeordnet ist, der kleiner oder gleich 50 % des radialen Abstands (E2) zwischen dem Äquator (E) und dem radial äußersten Punkt des Reifens (10) ist und noch bevorzugter radial zwischen dem axial inneren Abschnitt (341) der Karkassenschicht (34) und der Scheitelschicht (18) eingefügt ist oder radial außerhalb der Scheitelschicht (18) angeordnet ist.

9. Reifen (10) nach dem vorhergehenden Anspruch, wobei die Hauptrichtung (D3) jedes drahtförmigen Karkassenverstärkungselements (340) mit der Umfangsrichtung (Z) des Reifens (10) in mindestens einem Abschnitt (34F) jedes axial inneren Abschnitts und axial äußeren Abschnitts der Karkassenschicht (34), der sich radial in jeder Seitenwand (22) erstreckt, einen Winkel ACF bildet, dessen Absolutwert von 50° bis 90° reicht.

10. Verfahren zur Herstellung eines Reifens (10) nach einem der vorhergehenden Ansprüche, bei dem:
- durch Wickeln einer Karkassenlage (51) oder mehrerer Karkassenlagen (51) um einen Träger (60), der eine im Wesentlichen zylindrische Form um eine Hauptachse (A')aufweist, eine gewickelte Karkassenanordnung (52) gebildet wird, die axial von zwei axialen Rändern (52A, 52B) der gewickelten Karkassenanordnung (52) begrenzt ist und die drahtförmigen Karkassenverstärkungselemente (340) aufweist, die sich im Wesentlichen parallel zueinander axial von einem axialen Rand (52A, 52B) zu dem anderen axialen Rand (52A, 52B) der gewickelten Karkassenanordnung (50) erstrecken, wobei sich jedes drahtförmige Karkassenverstärkungselement (340) in der oder jeder Karkassenlage (51) entlang einer Hauptrichtung (K3) jedes drahtförmigen Karkassenverstärkungselements (340) in der oder jeder Karkassenlage (51) erstreckt, die mit der Umfangsrichtung (z) des Trägers (60) einen Anfangswinkel A3 jedes drahtförmigen Karkassenverstärkungselements (340) bildet, wobei die gewickelte Karkassenanordnung (52) dazu bestimmt ist, die einzige Karkassenschicht (34) zu bilden,
- durch Wickeln einer Scheitellage (49) oder mehrerer Scheitellagen (50) radial außerhalb der gewickelten Karkassenanordnung (52) eine gewickelte Scheitelanordnung (50) gebildet wird, die axial von zwei axialen Rändern (50A, 50B) der gewickelten Scheitelanordnung (50) begrenzt ist und die drahtförmigen Scheitelverstärkungselemente (180) aufweist, die sich im Wesentlichen parallel zueinander axial von einem axialen Rand (50A, 50B) zu dem anderen axialen Rand (50A, 50B) der gewickelten Scheitelanordnung (50) erstrecken, wobei sich jedes drahtförmige Scheitelverstärkungselement (180) in der oder jeder Scheitellage (49) entlang einer Hauptrichtung (K2) jedes drahtförmigen Scheitelverstärkungselements (180) in der oder jeder Scheitellage (49) erstreckt, die mit der Umfangsrichtung (z) des Trägers (60) einen Anfangswinkel A2 jedes drahtförmigen Scheitelverstärkungselements (180) bildet, wobei die gewickelte Scheitelanordnung (50) dazu bestimmt ist, die einzige Scheitelschicht (18) zu bilden,
wobei die gewickelte Karkassenanordnung (52) und die gewickelte Scheitelanordnung (50) eine Baugruppe (58) mit einer im Wesentlichen zylindrischen Form um eine Hauptachse (A') der Baugruppe (58) bilden, die im Wesentlichen mit der Hauptachse (A) des Trägers (60) zusammenfällt,
Verfahren, bei dem man die im Wesentlichen zylindrisch geformte Baugruppe (58) um die Hauptachse (A') der Baugruppe (58) so verformt, dass man eine im Wesentlichen torusförmige Baugruppe (58) um die Hauptachse (A') der Baugruppe (58) erhält, so dass nach dem Schritt der Verformung:
- die Hauptrichtung (K2) jedes drahtförmigen Scheitelverstärkungselements (180) mit der Umfangsrichtung (z) der Baugruppe (58) einen Endwinkel B2 jedes drahtförmigen Scheitelverstärkungselements (180) bildet,
- die Hauptrichtung (K3) jedes drahtförmigen Karkassenverstärkungselements (340) mit der Umfangsrichtung (z) der Baugruppe (58) einen Endwinkel B3S jedes drahtförmigen Karkassenverstärkungselements (340) in einem Abschnitt (52S) der gewickelten Karkassenanordnung (52) bildet, der sich axial im radialen Lot zur gewickelten Scheitelanordnung (50) erstreckt,
Verfahren, bei dem nach dem Verformungsschritt der Winkel B2 und der Winkel B3S sich in absoluten Werten und entgegengesetzten Orientierungen unterscheiden und zwar so, dass eine der Bedingungen EI oder EII erfüllt ist:
EI - der Absolutwert des Winkels B2 reicht von 10° bis 25° und der Absolutwert des Winkels B3S reicht von 20° bis 65° in dem Abschnitt (52S) der gewickelten Karkassenanordnung (52), der sich axial im radialen Lot zur gewickelten Scheitelanordnung (50) erstreckt,
EII - der Absolutwert des Winkels B2 reicht von 20° bis 65° und der Absolutwert des Winkels B3S reicht von 10° bis 25° in dem Abschnitt (52S) der gewickelten Karkassenanordnung (52), der sich axial im radialen Lot zur gewickelten Scheitelanordnung (50) erstreckt.

11. Verfahren nach dem vorhergehenden Anspruch, wobei der Schritt des Verformens der im Wesentlichen zylinderförmigen Baugruppe (58), um die im Wesentlichen torusförmige Baugruppe (58) zu erhalten, in einer Form zum Vernetzen der Baugruppe (58) durchgeführt wird.

12. Verfahren nach einem der Ansprüche 10 oder 11, wobei die gewickelte Scheitelanordnung (50) eine anfängliche Dichte (d2i) der drahtförmigen Scheitelverstärkungselemente (180) zu Beginn des Verformungsschritts und eine endgültige Dichte (d2f) der drahtförmigen Scheitelverstärkungselemente (180) zum Ende des Verformungsschritts aufweist, wobei der Verformungsschritt so durchgeführt wird, dass die endgültige Dichte (d2f) der drahtförmigen Scheitelverstärkungselemente (180) strikt größer ist als die anfängliche Dichte (d2i) der drahtförmigen Scheitelverstärkungselemente (180).

13. Verfahren nach dem vorhergehenden Anspruch, wobei der Schritt des Verformens so durchgeführt wird, dass während des Schritts des Verformens:
- in dem Fall, dass die Bedingung EI erfüllt ist, die Dichte der drahtförmigen Scheitelverstärkungselemente (180) von der anfänglichen Dichte (d2i) der drahtförmigen Scheitelverstärkungselemente (180) abnimmt, um eine minimale Dichte (d2min) der drahtförmigen Scheitelverstärkungselemente (180) zu erreichen, die strikt kleiner als die anfänglichen Dichte (d2i) der drahtförmigen Scheitelverstärkungselemente (180) ist, und dann die Dichte der drahtförmigen Scheitelverstärkungselemente (180) von der minimalen Dichte (d2min) der drahtförmigen Scheitelverstärkungselemente (180) auf die endgültige Dichte (d2f) der drahtförmigen Scheitelverstärkungselemente (180) ansteigt,
- in dem Fall, dass die Bedingung EII erfüllt ist, die Dichte der drahtförmigen Karkassenverstärkungselemente (340) von der anfänglichen Dichte (d3i) der drahtförmigen Karkassenverstärkungselemente (340) abnimmt, um eine minimale Dichte (d3min) der drahtförmigen Karkassenverstärkungselemente (340) zu erreichen, die strikt kleiner als die anfänglichen Dichte (d3i) der drahtförmigen Karkassenverstärkungselemente (340) ist, und dann die Dichte der drahtförmigen Karkassenverstärkungselemente (340) von der minimalen Dichte (d3min) der drahtförmigen Karkassenverstärkungselemente (340) auf die endgültige Dichte (d3f) der drahtförmigen Karkassenverstärkungselemente (340) ansteigt.

14. Verfahren nach Anspruch 12 oder 13, wobei:
- in dem Fall, dass die Bedingung EI erfüllt ist, das Verhältnis zwischen der endgültigen Dichte (d2f) der drahtförmigen Scheitelverstärkungselemente (180) und der anfänglichen Dichte (d2i) der drahtförmigen Scheitelverstärkungselemente (180) kleiner oder gleich 1,30, vorzugsweise kleiner oder gleich 1,25 ist,
- in dem Fall, dass die Bedingung EII erfüllt ist, das Verhältnis zwischen der endgültigen Dichte (d3f) der drahtförmigen Karkassenverstärkungselemente (340) und der anfänglichen Dichte (d3i) der drahtförmigen Karkassenverstärkungselemente (340) kleiner oder gleich 1,30, vorzugsweise kleiner oder gleich 1,25 ist.

15. Verfahren nach einem der Ansprüche 10 bis 14, wobei die Summe der absoluten Werte des Anfangswinkels A2 und des Anfangswinkels A3 strikt größer als 90° ist, vorzugsweise zwischen 95° und 120° und besonders bevorzugt zwischen 100° und 115° liegt.

## Claims

1. Motorcycle tyre (10) comprising a crown (12), two sidewalls (22) and two beads (24), each sidewall (22) connecting each bead (24) to the crown (12), the tyre (10) comprising a carcass reinforcement (32) anchored in each bead (24) and extending in each sidewall (22) and radially on the inside of the crown (12), the carcass reinforcement (32) comprising a single carcass layer (34), the crown (12) comprising:
- a tread (20) intended to come into contact with the ground when the tyre (10) is running,
- a crown reinforcement (14) arranged radially between the tread (20) and the carcass reinforcement (32), the crown reinforcement (14) comprising a single crown layer (18),
the crown layer (18) is axially delimited by two axial edges (18A, 18B) of the crown layer (18) and comprises filamentary crown reinforcing elements (180) extending axially from one axial edge (18A, 18B) to the other axial edge (18A, 18B) of the crown layer (18) substantially parallel to one another in a main direction (D2) of each filamentary crown reinforcing element (180) that forms, with the circumferential direction (Z) of the tyre (10), an angle AT,
the carcass layer (34) is axially delimited by two axial edges (34A, 34B) of the carcass layer (34) and comprises filamentary carcass reinforcing elements (340) extending axially from one axial edge (34A, 34B) to the other axial edge (34A, 34B) of the carcass layer (34), each filamentary carcass reinforcing element (340) extending in a main direction (D3) of each filamentary carcass reinforcing element (340) that forms, with the circumferential direction (Z) of the tyre (10), an angle ACS, in a portion (34S) of the carcass layer (34) that extends axially in radial line with the crown layer (18), the angle AT and the angle ACS having opposite orientations,
**characterized in that** the angle AT and the angle ACS are different in terms of absolute value, and **in that** one or the other of conditions I or II is met:
I - the angle AT ranges, in terms of absolute value, from 10° to 25° and the angle ACS ranges, in terms of absolute value, from 20° to 65° in the portion (34S) of the carcass layer (34) extending axially in radial line with the crown layer (18),
II - the angle AT ranges, in terms of absolute value, from 20° to 65° and the angle ACS ranges, in terms of absolute value, from 10° to 25° in the portion (34S) of the carcass layer (34) extending axially in radial line with the crown layer (18).

2. Tyre (10) according to the preceding claim, wherein:
- in instances in which condition I is met, the angle ACS ranges, in terms of absolute value, from 20° to 60° in the portion (34S) of the carcass layer (34) extending axially in radial line with the crown layer (18),
- in instances in which condition II is met, the angle AT ranges, in terms of absolute value, from 20° to 60°.

3. Tyre (10) according to either one of the preceding claims, wherein the sum of the absolute values of the angle AT and of the angle ACS is strictly less than or equal to 70°, preferably less than or equal to 60°, and more preferably ranges from 40° to 60°.

4. Tyre (10) according to any one of the preceding claims, wherein the ratio of the breaking strength of the crown layer to the breaking strength of the carcass layer is strictly greater than 1, preferably ranges from 1.10 to 1.45 and more preferentially from 1.25 to 1.35.

5. Tyre (10) according to any one of the preceding claims, wherein each bead (24) comprises a circumferential reinforcing element (26) and wherein the carcass layer (34) comprises:
- an axially interior portion (34I) extending from the median plane (M) of the tyre (10) and passing through one of the sidewalls (22) as far as the bead (24) radially on the inside of the circumferential reinforcing element (26), and
- an axially exterior portion (34E) arranged axially on the outside of the axially interior portion (34I) and extending from the bead (24) radially on the inside of the circumferential reinforcing element (26) as far as one of the axial edges (34A, 34B) of the carcass layer (34) ,
the axially interior portion (34I) and axially exterior portion (34E) being arranged in such a way that the carcass layer (34) is wound around the circumferential reinforcing element (26).

6. Tyre (10) according to Claim 5, wherein the axial edge (34A, 34B) of the carcass layer (34) is situated radially on the inside of the equator (E) of the tyre (10) and, preferably, situated radially on the inside of the equator (E) of the tyre (10) at a radial distance (C1) from the equator (E) that is greater than or equal to 50% of the radial distance (E1) between the equator (E) and the radially innermost point of the tyre (10).

7. Tyre (10) according to the preceding claim, wherein the main direction (D3) of each filamentary carcass reinforcing element (340) forms, with the circumferential direction (Z) of the tyre (10), in at least a portion (34F) of the axially interior portion of the carcass layer (34) that extends radially in each sidewall (22), an angle ACF ranging, in terms of absolute value, from 80° to 90°.

8. Tyre (10) according to Claim 5, wherein the axial edge of the carcass layer (34) is situated radially on the outside of the equator (E) of the tyre (10) and, preferably, situated radially on the outside of the equator (E) of the tyre (10) at a radial distance (C2) from the equator (E) that is less than or equal to 50% of the radial distance (E2) between the equator (E) and the radially outermost point of the tyre (10), and more preferably is interposed radially between the axially interior portion (34I) of the carcass layer (34) and the crown layer (18), or arranged radially on the outside of the crown layer (18).

9. Tyre (10) according to the preceding claim, wherein the main direction (D3) of each filamentary carcass reinforcing element (340) forms, with the circumferential direction (Z) of the tyre (10), in at least a portion (34F) of each axially interior portion and axially exterior portion of the carcass layer (34) that extends radially in each sidewall (22), an angle ACF ranging, in terms of absolute value, from 50° to 90°.

10. Method for manufacturing a tyre (10) according to any one of the preceding claims, wherein:
- a wound carcass assembly (52) axially delimited by two axial edges (52A, 52B) of the wound carcass assembly (52) and comprising the filamentary carcass reinforcing elements (340) extending substantially parallel to one another axially from one axial edge (52A, 52B) to the other axial edge (52A, 52B) of the wound carcass assembly (50), is formed, by winding a carcass ply (51) or a plurality of carcass plies (51) around a support (60) having substantially the shape of a cylinder around a main axis (A'), each filamentary carcass reinforcing element (340) extending, in the or each carcass ply (51), in a main direction (K3) of each filamentary carcass reinforcing element (340) in the or each carcass ply (51), which, with the circumferential direction (z) of the support (60), forms an initial angle A3 of each filamentary carcass reinforcing element (340), the wound carcass assembly (52) being intended to form the single carcass layer (34),
- a wound crown assembly (50) axially delimited by two axial edges (50A, 50B) of the wound crown assembly (50) and comprising the filamentary crown reinforcing elements (180) extending substantially parallel to one another axially from one axial edge (50A, 50B) to the other axial edge (50A, 50B) of the wound crown assembly (50) is formed, by winding a crown ply (49) or a plurality of crown plies (50), radially on the outside of the wound carcass assembly (52), each filamentary crown reinforcing element (180) extending, in the or each crown ply (49), in a main direction (K2) of each filamentary crown reinforcing element (180) in the or each crown ply (49) which, with the circumferential direction (z) of the support (60), forms an initial angle A2 of each filamentary crown reinforcing element (180), the wound crown assembly (50) being intended to form the single crown layer (18),
the wound carcass assembly (52) and the wound crown assembly (50) forming an assembly (58) of substantially cylindrical shape around a main axis (A') of the assembly (58) that is substantially coincident with the main axis (A) of the support (60),
in which method the assembly (58) of substantially cylindrical shape around the main axis (A') of the assembly (58) is deformed so as to obtain an assembly (58) of substantially toric shape around the main axis (A') of the assembly (58) so that, after the deformation step:
- the main direction (K2) of each filamentary crown reinforcing element (180) forms, with the circumferential direction (z) of the assembly (58), a final angle B2 of each filamentary crown reinforcing element (180),
- the main direction (K3) of each filamentary carcass reinforcing element (340) forms, with the circumferential direction (z) of the assembly (58), a final angle B3S of each filamentary carcass reinforcing element (340), in a portion (52S) of the wound carcass assembly (52) extending axially in radial line with the wound crown assembly (50),
in which method, after the deformation step, the angle B2 and the angle B3S are different in terms of absolute value and have opposite orientations and such that one or the other of conditions EI or EII is met:
EI - the angle B2 ranges, in terms of absolute value, from 10° to 25° and the angle B3S ranges, in terms of absolute value, from 20° to 65° in the portion (52S) of the wound carcass assembly (52) extending axially in radial line with the wound crown assembly (50),
EII - the angle B2 ranges, in terms of absolute value, from 20° to 65° and the angle B3S ranges, in terms of absolute value, from 10° to 25° in the portion (52S) of the wound carcass assembly (52) extending axially in radial line with the wound crown assembly (50).

11. Method according to the preceding claim, wherein the step of deforming the substantially cylindrical assembly (58) so as to obtain the substantially toric assembly (58) is performed in a mould in which the assembly (58) is cross-linked.

12. Method according to either one of Claims 10 and 11, wherein, with the wound crown assembly (50) having an initial density (d2i) of filamentary crown reinforcing elements (180) at the start of the deformation step and a final density (d2f) of filamentary crown reinforcing elements (180) at the end of the deformation step, the deformation step is performed in such a way that the final density (d2f) of filamentary crown reinforcing elements (180) is strictly greater than the initial density (d2i) of filamentary crown reinforcing elements (180) .

13. Method according to the preceding claim, wherein the deformation step is performed in such a way that, during the deformation step:
- in instances in which condition EI is met, the density of filamentary crown reinforcing elements (180) decreases from the initial density (d2i) of filamentary crown reinforcing elements (180) to reach a minimum density (d2min) of filamentary crown reinforcing elements (180) that is strictly less than the initial density (d2i) of filamentary crown reinforcing elements (180), and then the density of filamentary crown reinforcing elements (180) increases from the minimum density (d2min) of filamentary crown reinforcing elements (180) to reach the final density (d2f) of filamentary crown reinforcing elements (180),
- in instances in which condition EII is met, the density of filamentary carcass reinforcing elements (340) decreases from the initial density (d3i) of filamentary carcass reinforcing elements (340) to reach a minimum density (d3min) of filamentary carcass reinforcing elements (340) that is strictly less than the initial density (d3i) of filamentary carcass reinforcing elements (340), and then the density of filamentary carcass reinforcing elements (340) increases from the minimum density (d3min) of filamentary carcass reinforcing elements (340) to reach the final density (d3f) of filamentary carcass reinforcing elements (340).

14. Method according to Claim 12 or 13, wherein:
- in instances in which condition EI is met, the ratio between the final density (d2f) of filamentary crown reinforcing elements (180) and the initial density (d2i) of filamentary crown reinforcing elements (180) is less than or equal to 1.30, preferably less than or equal to 1.25,
- in instances in which condition EII is met, the ratio between the final density (d3f) of filamentary carcass reinforcing elements (340) and the initial density (d3i) of filamentary carcass reinforcing elements (340) is less than or equal to 1.30, preferably less than or equal to 1.25.

15. Method according to any one of Claims 10 to 14, wherein the sum of the absolute values of the initial angle A2 and of the initial angle A3 is strictly greater than 90°, preferably ranges from 95° to 120°, and more preferably from 100° to 115°.
